(19) 

Europäisches
Patentamt
European
Patent Office
Office européen
des brevets

(11) **EP 4 442 728 A1**

(12) **EUROPEAN PATENT APPLICATION**
published in accordance with Art. 153(4) EPC

(43) Date of publication:
**09.10.2024   Bulletin 2024/41**

(21) Application number: **21966346.5**

(22) Date of filing: **30.11.2021**

(51) International Patent Classification (IPC):
**C08G 63/00** $^{(2006.01)}$

(52) Cooperative Patent Classification (CPC):
**C08G 63/00**

(86) International application number:
**PCT/JP2021/043935**

(87) International publication number:
**WO 2023/100260 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nisshinbo Holdings Inc.
Tokyo 103-8650 (JP)**

(72) Inventors:
• **HASHIBA Toshifumi
Chiba-city, Chiba 267-0056 (JP)**

• **HAYAKAWA Kazutoshi
Chiba-city, Chiba 267-0056 (JP)**
• **UEMURA Naohiro
Chiba-city, Chiba 267-0056 (JP)**
• **MATSUZAKA Erina
Chiba-city, Chiba 267-0056 (JP)**

(74) Representative: **Ter Meer Steinmeister & Partner
Patentanwälte mbB
Nymphenburger Straße 4
80335 München (DE)**

(54) **MARINE BIODEGRADABLE POLYMER COMPOUND, MARINE BIODEGRADATION PROMOTER, AND MARINE BIODEGRADABLE RESIN COMPOSITION**

(57)    A marine biodegradable polymer compound composed of a monovalent metal cation and a polymeric polyvalent anion which has a repeating unit including at least one bond selected from among ether bonds, ester bonds, amide bonds, and carbonate bonds in the main chain thereof, and which has a total of two or more monovalent anionic substituent groups at the terminals of the main chain and/or a side chain.

EP 4 442 728 A1

**Description**

TECHNICAL FIELD

The present invention relates to a marine biodegradable polymer compound, a marine biodegradation promoter and a marine biodegradable resin composition.

BACKGROUND ART

Environmental contamination by microplastics (marine contamination) and the harmful effects of microplastics on ecosystems have become a problem in recent years, and so a variety of efforts to reduce their environmental impact are underway. Noteworthy among these efforts is the development and widespread adoption of biodegradable plastics.
Ordinary biodegradable plastics exhibit a high biodegradability in environments such as soils and sludge where there is an abundance of microorganisms to carry out decomposition. However, decomposition does not readily take place in environments such as the oceans where the concentration of microorganisms is extremely low (Non-Patent Document 1). Even with resins such as polycaprolactone (PCL) and polyhydroxyalkanoates (PHA) for which biodegradability in the oceans has been reported, the rate of decomposition has been found to differ widely depending on the type of seawater and is reportedly affected by a variety of factors, such as the presence/absence and cell count of plastic-degrading bacteria in seawater, and the salinity, pH, water temperature, dissolved oxygen concentration and dissolved organic carbon level of the water (Non-Patent Document 2).
Hence, there exists a desire for the development of materials which reliably decompose in any type of seawater, and materials which are capable of serving as degradation promoters for plastics that do not readily biodegrade in seawater.

PRIOR ART DOCUMENTS

NON-PATENT DOCUMENTS

Non-Patent Document 1: Takada, H.: "Current status of microplastics contamination --International trends and countermeasures," Haikibutsu Shigen Junkan Gakkaishi, Vol. 29, No. 4, pp. 261-269 (2018)
Non-Patent Document 2: Ebisui, A., et al.: "Decomposition of biodegradable plastics in seawater," Suisan Kogaku, Vol., 40, No. 2, pp. 143-149 (2003)

SUMMARY OF INVENTION

TECHNICAL PROBLEM

The present invention was arrived at in light of the above circumstances. The objects of this invention are to provide a polymer compound which gives rise to biodegradability in the oceans and a marine biodegradable composition which includes the polymer compound.

SOLUTION TO PROBLEM

The inventors have conducted intensive investigations in order to achieve the above objects. As a result, they have discovered that polymer compounds which consist of a monovalent metal cation and a polymeric polyvalent anion having on a main chain thereof repeating units containing at least one bond selected from the group consisting of ether, ester, amide and carbonate bonds and having a total of two or more monovalent anionic substituents at ends of the main chain and/or side chains, and polymer compounds obtained by bonding such a polymeric polyvalent anion with a metal cation having a valence of two or more, in spite of not dissolving in fresh water and being hydrophobic, gradually dissolve in seawater or exhibit hydrophilicity.
Unlike ordinary biodegradable plastics, primary decomposition (to smaller molecules) in seawater proceeds not via hydrolysis or biodegradation by enzymes and microorganisms, but rather via molecular cleavage by metal ions such as sodium. Hence, regardless of the type of seawater, this material undergoes stable primary decomposition and is converted to smaller molecules having structures which dissolve in or are compatible with seawater, in this way greatly promoting hydrolysis and degradation by enzymes and microorganisms. The inventors have also found that by using this material in combination with plastics, especially biodegradable plastics, it is the first to incur primary decomposition in seawater and has (1) the effect of forming holes in the plastic material, increasing the specific surface area of the plastic and stimulating the growth of microorganisms which carry out decomposition, and (2) the effect of, owing to primary decomposition, accelerating secondary decomposition, i.e., biodegradation by microorganisms. As a result, the biodegradation of plastic materials in the ocean can be accelerated. This discovery ultimately led to the present invention.

Accordingly, the invention provides the following marine biodegradable polymer compound, marine biodegradation promoter and marine biodegradable resin composition.

1. A marine biodegradable polymer compound comprising a monovalent metal cation and a polymeric polyvalent anion having on a main chain thereof repeating units containing at least one bond selected from the group consisting of ether, ester, amide and carbonate bonds and having a total of two or more monovalent anionic substituents at ends of the main chain and/or side chains.

2. The marine biodegradable polymer compound of 1 above, wherein the monovalent metal cation is a sodium ion or a potassium ion.

3. The marine biodegradable polymer compound of 1 or 2 above, wherein the polymeric polyvalent anion is a polymeric divalent anion having a monovalent anionic substituent at each of both ends of the main chain.

4. The marine biodegradable polymer compound of any of 1 to 3 above, wherein the polymeric polyvalent anion has a monovalent anionic substituent at each of both ends of a polyalkylene glycol, polyester, polycaprolactone, polycarbonate or polyamide.

5. The marine biodegradable polymer compound of any of 1 to 4 above, wherein the recurring units include on the main chain at least one bond selected from ether and ester bonds.

6. The marine biodegradable polymer compound of any of 1 to 5 above, wherein the polymeric polyvalent anion has a molecular weight of from 300 to 5,000.

7. The marine biodegradable polymer compound of any of 1 to 6 above which is a linear polymer compound.

8. The marine biodegradable polymer compound of any of 1 to 7 above which does not include a cyclic structure on the molecule.

9. The marine biodegradable polymer compound of any of 1 to 8 above, wherein the anionic substituent is a carboxylic acid anion, a sulfonic acid anion, a sulfate ester anion or a phosphate ester anion.

10. A marine biodegradable polymer compound in which a structural unit having two or more monovalent anionic substituents is bonded with a metal cation having a valence of two or more and which has a monovalent metal cation at an end thereof,
wherein the structural unit includes a polymeric polyvalent anion originating from the marine biodegradable polymer compound of any of 1 to 9 above.

11. The marine biodegradable polymer compound of 10 above, wherein the structural unit further includes a divalent low-molecular-weight anion having two monovalent anionic substituents with molecular weights of from 100 to 500.

12. The marine biodegradable polymer compound of 10 or 11 above, wherein the monovalent metal cation is a sodium ion or a potassium ion.

13. The marine biodegradable polymer compound of any of 10 to 12 above, wherein the metal cation having a valence of two or more is a calcium ion, magnesium ion or aluminum ion.

14. The marine biodegradable polymer compound of any of 1 to 13 above, wherein at least one end is capped with a capping segment in such a manner as to not leave a monovalent metal cation.

15. The marine biodegradable polymer compound of 14 above, wherein the capping segment is one having a monovalent hydrocarbon group of 3 or more carbon atoms.

16. The marine biodegradable polymer compound of 14 or 15 above, wherein the capping segment is an anion from a fatty acid having a monovalent hydrocarbon group of 3 or more carbon atoms or an amino acid derivative having a monovalent hydrocarbon group of 3 or more carbon atoms.

17. The marine biodegradable polymer compound of 16 above, wherein the amino acid derivative is a sarcosine derivative or a glutamic acid derivative.

18. The marine biodegradable polymer compound of any of 1 to 17 above which is a powder having an average particle size of from 0.1 to 10,000 $\mu$m.

19. The marine biodegradable polymer compound of 18 above which is a thermoplastic powder having a melting temperature of between 60°C and 200°C.

20. The marine biodegradable polymer compound of 18 or 19 above, wherein a melt-molded body of particles of the powder has a contact angle 30 seconds after a water droplet is deposited thereon of 50° or more.

21. A marine biodegradation promoter comprising the marine biodegradable polymer compound of any of 1 to 20 above.

22. A marine biodegradable resin composition which includes the marine biodegradation promoter of 21 above and a resin.

23. The marine biodegradable resin composition of 22 above, wherein the resin is a biodegradable resin.

24. The marine biodegradable resin composition of 22 or 23 above, wherein the content of the marine biodegradation promoter is from 1 to 50 wt% and the content of the biodegradable resin is from 50 to 99 wt%.

25. A molded body obtained from the marine biodegradable resin composition of any of 22 to 24 above.

## ADVANTAGEOUS EFFECTS OF INVENTION

Because the marine biodegradable polymer compound of the invention gradually dissolves in seawater or exhibits hydrophilicity, the biodegradation within the ocean of resin compositions containing the compound and molded bodies thereof is accelerated, making this compound useful as a measure for controlling marine pollution. Environmentally friendly compositions and molded bodies can be obtained by using a marine biodegradation promoter consisting of the marine biodegradable polymer compound of the invention.

## BRIEF DESCRIPTION OF DRAWINGS

[FIG. 1] FIG. 1 shows a scanning electron micrograph (500$\times$) taken after immersing the film from Example 4-6 in water for 45 days.

[FIG. 2] FIG. 2 shows a scanning electron micrograph (500$\times$) taken after immersing the film from Example 4-6 in a 3 wt% aqueous solution of sodium chloride for 45 days.

## DESCRIPTION OF EMBODIMENTS

[Marine Biodegradable Polymer Compound]

The marine biodegradable polymer compound of the invention in a first aspect is a marine biodegradable polymer compound (also referred to below as "Polymer Compound A") comprising a monovalent metal cation and a polymeric polyvalent anion having on a main chain thereof repeating units containing at least one bond selected from the group consisting of ether, ester, amide and carbonate bonds and having a total of two or more monovalent anionic substituents at ends of the main chain and/or side chains.

The monovalent metal cation is preferably an ingredient which is plentiful in seawater. From the standpoint of safety, it is preferably a sodium ion or a potassium ion.

The polymeric polyvalent anion is preferably one with a structure having a monovalent anionic substituent at each of both ends of a polyalkylene glycol, polyester, polycaprolactone, polycarbonate or polyamide. It is especially preferable for the polymeric polyvalent anion to have recurring units which include at least one bond selected from ether and ester bonds.

The monovalent anionic substituents are preferably carboxylic acid anions (-COO$^-$), sulfonic acid anions (-SO$_3^-$), sulfuric acid anions (-O-SO$_3^-$) or phosphoric acid anions (-P(=O)(OH)-O). Of these, -COO$^-$, -SO$_3^-$ and -O-SO$_3^-$ are preferred, -COO$^-$ and -SO$_3^-$ are more preferred, and -COO$^-$ is still more preferred.

The polymeric polyvalent anion has a molecular weight of preferably from 300 to 5,000. At a molecular weight within this range, it is readily cleaved in the ocean and is fully satisfactory in terms of biodegradability, in addition to which the physical properties as a resin, including heat meltability, and the compatibility with other resins are good. The molecular weight of Polymer Compound A is more preferably from 500 to 4,000, even more preferably from 800 to 3,000, and most preferably from 1,000 to 2,500. In this invention, the molecular weight of the polymer is the absolute molecular weight measured by the static light-scattering method.

From the standpoint of biodegradability, the polymeric polyvalent anion is preferably a divalent anion which is linear and has a monovalent anionic substituent at each end. In order to adjust the physical properties and the rate of biodegradation, the anion may also have a monovalent anionic substituent at the end of a branching side chain. That is, the anion may have three or more monovalent anionic substituents. For example, Polymer Compound A may be a compound in which polyfunctional groups such as glycerol, sorbitol, pentaerythritol, xylitol, trimethylolethane or trimethylolpropane serve as the main skeleton and which includes repeating units containing an ether bond, ester bond or the like. Such a compound may be of one type used alone. Alternatively, by using it in combination with Polymer Compound A containing another divalent anion, a crosslinked structure can be introduced onto the subsequently described Polymer Compound B, enabling the heat resistance of Polymer Compound B to be increased. Specific examples of ingredients having a polyfunctional skeleton include compounds in which the monovalent anionic substituents have been inserted onto ends via linkage groups, such as Polypropylene Glycol, Triol Type 300 and Polypropylene Glycol, Triol Type 1500 (from Fujifilm Wako Pure Chemical Corporation, Ltd.), and also Kuraray Polyol F-1010 (Kuraray Co., Ltd.) and Placcel 308 (Daicel Corporation).

From the standpoint of promoting biodegradability, it is preferable for Polymer Compound A to not include a cyclic structure. However, a cyclic structure may be introduced within a range that does not adversely affect the biodegradability and regulation thereof in order to impart desired physical properties.

The method for preparing Polymer Compound A is not particularly limited. For example, preparation may be carried out by introducing the monovalent anionic substituents via linkage groups onto a compound (also referred to below as "Compound A") which has on the main chain recurring units containing at least one bond selected from the group consisting of ether, ester, amide and carbonate bonds and has active functional groups at both ends thereof.

A commercial product may be used as Compound A. Examples include Kurary Polyol P-1010, P-2010, P-2050, P-520, C-590 and F-1010 (Kuraray Co., Ltd.), Placcel 210B, 220N and 308 (Daicel Corporation), and Polypropylene Glycol, Diol Type 1000 and Polypropylene Glycol, Triol Type 300 (Fujifilm Wako Pure Chemical Corporation, Ltd.).

Examples of the active functional groups include hydroxyl, amino and thiol groups. The monovalent anionic substituents which are introduced onto the active functional group-containing compound are preferably -COO$^-$ because introduction is easy.

The method for introducing monovalent anionic substituents onto Compound A may be, for example, in cases where -COO$^-$ is to be introduced, a method which carries out an esterification reaction between the active functional group-containing compound and a dicarboxylic acid anhydride in the presence of a monovalent metal salt, or a method which reacts these with a monovalent metal to form a metal alkoxide and then carries out esterification using a dicarboxylic acid anhydride. The dicarboxylic acid anhydride is preferably succinic anhydride, maleic anhydride or phthalic anhydride. From the standpoint of biodegradability, succinic anhydride and maleic anhydride are more preferred. In cases where -SO$_3^-$ is to be introduced, the method may be, for example, one which reacts a compound having a hydroxyl group or an amino group as the active functional group with SO$_3$ or a SO$_3$·Lewis base complex in an aprotic polar solvent. A tertiary amine, pyridine, DMF or the like may be used as the Lewis base. Acetonitrile or the like is preferred as the aprotic polar solvent. These reactions may be carried out by known methods.

The marine biodegradable polymer compound of the invention in a second aspect is a marine biodegradable polymer compound (also referred to below as "Polymer Compound B") in which a structural unit having two or more monovalent anionic substituents is bonded with a metal cation having a valence of two or more and which has a monovalent metal cation at an end thereof, wherein the structural unit includes a polymeric polyvalent anion originating from Polymer Compound A.

Taking safety into account, the cation having a valence of two or more is preferably a calcium, magnesium or aluminum ion; taking the environment in seawater into account, the cation is more preferably a calcium or magnesium ion, and most preferably a calcium ion.

From the standpoint of molecule cleavage by seawater, Polymer Compound B has preferably three or more, and more preferably four or more, structural units consisting of the polymeric polyvalent anion. That is, Polymer Compound B has preferably two or more, and more preferably three or more, metal cations with a valence of two or more per molecule.

Polymer Compound B has a molecular weight of preferably from 600 to 1,000,000, more preferably from 1,000 to 500,000, even more preferably from 5,000 to 300,000, and most preferably from 10,000 to 100,000. The subsequently described ordinary biodegradable resins exhibit a high biodegradability in environments such as soil and sludge where there is an abundance of microorganisms that carry out decomposition. However, decomposition does not readily take place in environments such as the ocean where the concentration of microorganisms is extremely low. The inventors have focused their attention on metal ions that are abundant in seawater and on the stable salinity within the ocean. They conjecture that Polymer Compound B, by decomposing (cleaving into smaller molecules) via ion exchange within seawater and chemically breaking down into smaller molecules, helps to efficiently promote decomposition even within environments having few microorganisms that carry out biodegradation. Setting the molecular weight of Polymer Compound B within the above range more efficiently promotes biodegradability in the oceans and is useful also during normal use in terms of the physical properties of the resin composition that is employed.

Polymer Compound B can be prepared by reacting Polymer Compound A with a polyvalent metal salt containing a metal cation having a valence of two or more, and thereby bonding the polymeric polyvalent anions with metal cations having a valence of two or more. Specific examples include methods (1) to (3) below.

(1) A method which includes the step of forming a water-in-oil (W/O) emulsion that contains Polymer Compound A in water droplets and the step of carrying out bonding treatment using a polyvalent metal salt (Method 1).
(2) A method which, by the dropwise addition of a powder or solution of a polyvalent metal salt to a solvent in which Polymer Compound A dissolves, effects settling out or precipitation while carrying out bonding treatment, or a method which, by the dropwise addition of a solution of Polymer Compound A to a powder of a polyvalent metal salt or a solvent in which the polyvalent metal salt dissolves, effects settling out or precipitation while carrying out bonding treatment.
(3) A method which hot-melts Polymer Compound A and carries out bonding treatment by adding a powder or solution of a polyvalent metal salt to the molten Polymer Compound A (Method 3).

Method 1 includes the step of forming a W/O emulsion that contains Polymer Compound A in water droplets, and the step of carrying out ionic bonding treatment using a polyvalent metal salt.

An example of a W/O emulsion forming method is described. First, a solution of one or more type of Polymer Compound A dissolved in water or a mixed solvent of water and a hydrophilic organic solvent is prepared. If necessary, heating may be carried out at this time. Next, the solution and a hydrophobic organic solvent are mixed together and the mixture is emulsified using an agitator, homogenizer or the like. At the time of mixture, the solution may be added to the hydrophobic organic solvent, or the hydrophobic organic solvent may be added to the solution. A surfactant or a polymeric stabilizer may be dissolved in the hydrophobic organic solvent and used at this time to control the particle size of the water droplets in the W/O emulsion.

Alternatively, as another example of a W/O emulsion forming method, one or more type of Polymer Compound A, a hydrophobizing agent, water, a surfactant, a hydrophobic organic solvent and other necessary ingredients may be charged all at once into a container and emulsified using an agitator, homogenizer or the like.

Heating may be carried out when forming the W/O emulsion. By heating, the solubility can be increased, enabling Polymer Compound A to be homogenized and enabling the W/O emulsion to be stabilized. The heating temperature is preferably between 15°C and 100°C, and more preferably between 40°C and 80°C.

After the W/O emulsion has been formed, ionic bonding treatment is carried out. Bonding treatment may be carried out by adding a polyvalent metal salt-containing solution to the W/O emulsion and stirring. Alternatively, the W/O emulsion may be added to a polyvalent metal salt-containing solution and stirring carried out.

Examples of the polyvalent metal salt include calcium salts, strontium salts, magnesium salts, barium salts, radium salts, lead salts, zinc salts, nickel salts, iron salts, copper salts, cadmium salts, cobalt salts, manganese salts, aluminum salts, gallium salts, indium salts and thallium salts. Calcium salts, magnesium salts and aluminum salts are preferred because they are metals which are present in seawater and also for environmental reasons and in terms of safety and flexibility. Taking the environment in seawater into account, calcium salts and magnesium salts are more preferred. Specific examples of such polyvalent metal salts include calcium chloride, calcium sulfate, calcium carbonate, calcium hydroxide, calcium oxide, magnesium chloride, magnesium sulfate, magnesium carbonate, magnesium hydroxide, magnesium oxide, aluminum sulfate and potassium aluminum sulfate (potassium alum). In terms of solubility in water, handleability, cost and the like, calcium chloride, magnesium chloride and aluminum sulfate are preferred.

The concentration of polyvalent metal salt within the polyvalent metal salt-containing solution is preferably from 1 to 40 wt%, and more preferably from 10 to 30 wt%. Water, lower alcohol-type solvents such as methanol, ethanol, 1-propanol and 2-propanol, and mixed solvents thereof are preferred as the solvent for this solution, although mixed solvents with other organic solvents are also acceptable so long as they can dissolve the salt to the target concentration without dissolving the particles.

If necessary, bonding treatment may be carried out while heating. Heating may be carried out when adding the polyvalent metal salt-containing solution to the dispersion, may be carried out when stirring following such addition, or may be carried out at both of these times. The heating temperature is preferably between 10°C and 100°C, and more preferably between 40°C and 80°C. The treatment time is preferably from 0.5 to 24 hours, and more preferably from 1 to 12 hours. By heating, the solubility of the hydrophobizing agent can be increased.

Because one or more monovalent salt of a monovalent anion having 6 or more carbon atoms and 3 or more oxygen atoms and a hydrophobizing agent are included in the aqueous phase of the W/O emulsion, by carrying out bonding treatment, hydrophobizing treatment is also carried out at the same time.

After bonding treatment, if necessary, washing and drying of the particles may be carried out to obtain particles composed of the hydrophobizing compound. Washing may be carried out by an ordinary method such as that of, for example, removing the solvent following bonding treatment, adding water, and centrifugation. Drying may be carried out by an ordinary method such as spray drying, vacuum drying or freeze drying. If necessary, the size of the hydrophobizing compound particles thus obtained may be adjusted by carrying out surface treatment or grinding treatment using known equipment.

Method 2 is a method which, by the dropwise addition of a powder or solution of a polyvalent metal salt to a solvent in which Polymer Compound A dissolves, effects settling out or precipitation while carrying out bonding treatment, or a method which, by the dropwise addition of a solution of Polymer Compound A to a powder of a polyvalent metal salt or a solvent in which the polyvalent metal salt dissolves, effects settling out or precipitation while carrying out bonding treatment.

An example of Method 2 is described. First, Solution A is prepared by dissolving one or more type of Polymer Compound A in water or a mixed solvent of water and a hydrophilic organic solvent. If necessary, heating may be carried out at this time in order to increase the solubility. Next, solution B containing a polyvalent metal salt is added and stirring is carried out. Alternatively, a solution in which one or more type of Starting Compound A has been dissolved may be added to and stirred with a polyvalent metal salt-containing solution. The polyvalent metal salt-containing solution used may be similar to that mentioned above in the description of Method 1.

If the polyvalent metal salts has a good reactivity and it reacts even in a solid state, it may be used in powder form without employing a medium, or it may be used after dispersion in a small amount of medium.

In this way, bonding treatment can be carried out and the target Polymer Compound B which has gradually become insoluble settles out or precipitates. The treatment time is preferably from 0.5 to 24 hours, and more preferably from 1 to 12 hours.

To control the particle size of the settled or precipitated matter, a surfactant or a polymeric stabilizer may be dissolved at this time in either or both of Solutions A and B.

Heating may be carried out when inducing the settling out or precipitation of the target Polymer Compound B. Such heating may be carried out when mixing together Solution A and Solution B, may be carried out when stirring following such mixture, or may be carried out at both of these times. By heating, the solubility of Polymer Compound B can be increased, making it possible to create larger molecules and uniformize the molecular weight distribution due to bonding, and also making it possible to stabilize bonding. The heating temperature is preferably between 15°C and 100°C, and more preferably between 40°C and 80°C.

Following treatment, if necessary, washing and drying of the particles may be carried out to obtain particles of the hydrophobizing compound. Washing may be carried out by an ordinary method such as that of, for example, removing the solvent following bonding treatment, adding water, and centrifugation. Drying may be carried out by an ordinary method such as spray drying, vacuum drying or freeze drying. The size of the hydrophobizing compound particles thus obtained may be adjusted by carrying out surface treatment or grinding treatment using known equipment.

Method 3 is a method which carries out bonding treatment by hot-melting Polymer Compound A and adding a powder or solution of a polyvalent metal salt to the molten Polymer Compound A.

An example of Method 3 is described. First, Polymer Compound A is heated and a Polymer Compound A melt is prepared. The temperature at which Polymer Compound A is heated is at or above the melting point and preferably at or above 100°C. Next, a powder of a polyvalent metal salt or a dispersion or solution of a polyvalent metal salt dispersed or dissolved in a suitable solvent such as water or a lower alcohol is added to the Polymer Compound A melt under stirring. The polyvalent metal salt used may be one that is similar to those mentioned in the description of Method 1.

In this way, bonding treatment can be carried out, the viscosity of the melt gradually rises, and Polymer Compound B can be obtained in bulk. The treatment time is preferably from 0.5 to 24 hours, and more preferably from 1 to 12 hours.

Following treatment, if necessary, washing and drying of the particles may be carried out to obtain particles of the hydrophobizing compound. Washing may be carried out by an ordinary method such as that of, for example, removing the solvent following bonding treatment, adding water, and centrifugation. Drying may be carried out by an ordinary method such as spray drying, vacuum drying or freeze drying. The size of the hydrophobizing compound particles thus obtained may be adjusted by carrying out surface treatment or grinding treatment using known equipment.

When preparing Polymer Compound B, in order to adjust the physical properties, it is also possible to impart a partially crosslinked structure or the like by using, together with Polymer Compound A, a salt consisting of a monovalent cation and an anion having three or more monovalent anionic substituents. A polyvalent aliphatic carboxylic acid salt having a valence of three or more, such as an aconitic acid salt, or a polyvalent aromatic carboxylic acid salt, such as a mellitic acid salt, may be used as such a salt.

During the preparation of Polymer Compound B, a divalent low-molecular-weight anion-containing compound (also referred to below as "Low-Molecular-Weight Compound C") having two monovalent anionic substituents with molecular weights of from 100 to 500 may be used together with Polymer Compound A for the purpose of adjusting the melting point and physical properties or to extend the chain length. In this case, Polymer Compound B includes, in addition to structural units consisting of a polymeric polyvalent anion originating from Polymer Compound A, structural units consisting of a divalent low-molecular-weight anion originating from Low-Molecular-Weight Compound C.

The molecular weight of Low-Molecular-Weight Compound C is preferably from 100 to 300.

By inserting structural units consisting of a divalent low-molecular-weight anion originating from Low-Molecular-Weight Compound C within structural units consisting of a polymeric polyvalent anion originating from Polymer Compound A, it is possible to shorten the distance between ionic bonds and adjust the melting point or to introduce functional groups such as aromatic rings which enhance the mechanical properties. Also, by adjusting the charging method (timing) in the bonding treatment of Polymer Compound A with Low-Molecular-Weight Compound C and a metal cation having a valence of two or more, it is possible to obtain a Polymer Compound B that has been made by chain extension a random copolymer or block copolymer.

When preparing a Polymer Compound B such as this, the content of Low-Molecular-Weight Compound C based on the sum of Polymer Compound A and Low-Molecular-Weight Compound C is preferably from 0.5 to 50 wt%, more preferably from 1 to 30 wt%, and even more preferably from 3 to 20 wt%. The content of Polymer Compound A based on the sum of Polymer Compound A and Low-Molecular-Weight C is, in order of increasing preference, preferably from 50 to 99.5 wt%, more preferably from 70 to 99 wt%, and even more preferably from 80 to 97 wt%. By including Low-Molecular-Weight Compound C within this range, Polymer Compound B becomes a larger molecule and the physical properties are at the same time adjusted and improved, enabling practical use as a marine biodegradation promoter that accelerates biodegradation within seawater.

Examples of Low-Molecular-Weight Compound C include sodium or potassium salts of compounds selected from among divalent sulfonic acids such as 1,5-naphthalenedisulfonic acid and ethanedisulfonic acid, phosphoric acid monoesters such as monoethyl phosphate, and divalent carboxylic acids such as malic acid, aspartic acid, glutamic acid, succinic acid, adipic acid, sebacic acid, terephthalic acid and isophthalic acid. Of these, from the standpoint of reactivity, sulfonic acid salts and carboxylic acid salts are preferred; taking into account safety and biodegradability, carboxylic acid salts are preferred. In terms of adjusting the melting point and the physical properties, sodium adipate, sodium sebacate and sodium terephthalate are especially preferred.

Polymer Compounds A and B may be capped on at least one end with a capping segment in such manner as to not leave a monovalent metal cation.

Through selection of the capping segment, it is possible, in a solitary material or in composite materials (marine biodegradable resin compositions) using this material, to introduce numerous advantageous effects, such as adjusting the melting temperature and melt viscosity, adjusting the degree of crystallization, adjusting adherence by microorganisms and biodegradability, adjusting physical properties such as the tensile strength, flexural strength and elasticity of the resin, improving compatibility with resins, adjusting the degree of hydrophobization, adjusting the water repellency, adjusting the adhesiveness and adjusting the plasticity, enabling improvements to be made both in terms of the biodegradability and in terms of the physical properties of the marine biodegradable resin composition. Because it is desirable for the organic anion which serves as the capping segment to have a structure with biodegradability in the oceans, selecting a capping segment with marine biodegradability that has a molecular weight of 5,000 or less is advantageous. For example, in cases where emphasis is placed on the rate of biodegradability in the ocean and on maintaining average physical properties, a capping segment having a molecular weight of 2,500 or less is preferred, and a capping segment having a molecular weight of 1,000 or less is more preferred.

Specifically, the capping segment is preferably one having a monovalent hydrocarbon group of 3 or more carbon atoms, more preferably one having a monovalent hydrocarbon group of 6 or more carbon atoms, even more preferably one having a monovalent hydrocarbon group of 10 or more carbon atoms, and most preferably one having a monovalent hydrocarbon group of 12 or more carbon atoms. Although there is no particular upper limit in the number of carbons on the monovalent hydrocarbon group, one having 30 carbon atoms or less is preferred, one having 25 carbon atoms or less is more preferred, and one having 20 carbon atoms or less is even more preferred.

The capping segment is preferably a monovalent organic anion selected from among carboxylic acid anions having a monovalent hydrocarbon group of 3 or more carbon atoms, sulfonic acid anions having a monovalent hydrocarbon group of 3 or more carbon atoms, sulfate ester anions having a monovalent hydrocarbon group of 3 or more carbon atoms and phosphate ester anions having a monovalent hydrocarbon group of 3 or more carbon atoms. Of these, a monovalent organic anion originating from a carboxylic acid having a monovalent hydrocarbon group of 3 or more carbon atoms is preferred; a monovalent organic anion originating from a fatty acid having a monovalent hydrocarbon group of 3 or more carbon atoms or an amino acid derivative having a monovalent hydrocarbon group of 3 or more carbon atoms is more preferred.

End capping may be carried out using at least one type of end capping agent selected from carboxylic acids having a monovalent hydrocarbon group of 3 or more carbon atoms, salts of such carboxylic acids, sulfonic acids having a monovalent hydrocarbon group of 3 or more carbon atoms, salts of such sulfonic acids, sulfate esters having a monovalent hydrocarbon group of 3 or more carbon atoms, salts of such sulfate esters, phosphate esters having a monovalent hydrocarbon group of 3 or more carbon atoms and salts of such phosphates esters. End capping may be carried out by adding the end capping agent to a solution containing Polymer Compound A or B, and subsequently carrying out bonding treatment with a polyvalent metal ion.

The carboxylic acid is preferably a fatty acid having a monovalent hydrocarbon group of 6 to 30 carbon atoms or an amino acid derivative having a monovalent hydrocarbon group of 6 to 30 carbon atoms.

Examples of the fatty acid include caproic acid, enanthoic acid, caprylic acid, octanoic acid, pelargonic acid, capric acid, undecylenic acid, lauric acid, myristic acid, pentadecanoic acid, palmitic acid, palmitoleic acid, margaric acid, stearic acid, isostearic acid, oleic acid, vaccenic acid, ricinolic acid, linoleic acid, linolenic acid, eleostearic acid, oxystearic acid, arachidic acid, mead acid, arachidonic acid, eicosapentaenoic acid, behenic acid, docosahexaenoic acid, lignoceric acid, nervonic acid, cerotic acid, montanic acid, melissic acid, coconut oil fatty acid and palm oil fatty acid. Isomers of these having a branched structure are also acceptable.

The fatty acid salt is preferably a monovalent metal salt, specific examples of which include caprylic acid salts such as potassium caprylate and sodium caprylate; octanoic acid salts such as potassium octanoate and sodium octanoate; pelargonic acid salts such as potassium pelargonate and sodium pelargonate; capric acid salts such as potassium caprate and sodium caprate; undecylenic acid salts such as potassium undecylenate and sodium undecylenate; lauric acid salts such as potassium laurate and sodium laurate; myristic acid salts such as potassium myristate and sodium myristate; pentadecanoic acid salts such as potassium pentadecanoate and sodium pentadecanoate; palmitic acid salts such as potassium palmitate and sodium palmitate; margaric acid salts such as potassium margarate and sodium margarate; stearic acid salts such as potassium stearate and sodium stearate; isostearic acid salts such as potassium isostearate and sodium isostearate; oleic acid salts such as potassium oleate and sodium oleate; linoleic acid salts such as potassium linoleate and sodium linoleate; linolenic acid salts such as potassium linolenate and sodium linolenate; arachidic acid salts such as potassium arachidate and sodium arachidate; arachidonic acid salts such as potassium arachidonate and sodium arachidonate; behenic acid salts such as potassium behenate and sodium behenate; docosahexaenoic acid salts such as sodium docosahexaenoate; and coconut oil fatty acids such as potassium cocoate and sodium cocoate. Of these, fatty acid salts having a monovalent hydrocarbon group of 10 to 20 carbon atoms, such as lauric acid salts, myristic acid salts, palmitic acid salts, stearic acid salts and arachidic acid salts, are preferred.

The fatty acid and salt thereof is preferably one having a monovalent hydrocarbon group of 6 to 30 carbon atoms, more preferably one having a monovalent hydrocarbon group of 10 to 25 carbon atoms, and still more preferably one having a monovalent hydrocarbon group of 12 to 20 carbon atoms.

Examples of the amino acid derivative include the following derivatives of amino acids having a hydrocarbon group: sarcosine derivatives such as caproyl sarcosine, lauroyl sarcosine, myristoyl sarcosine, palmitoyl sarcosine and cocoyl sarcosine; glutamic acid derivatives such as caproyl glutamic acid, lauroyl glutamic acid, myristoyl glutamic acid, palmitoyl glutamic acid, stearoyl glutamic acid, cocoyl acylglutamic acid, cocoyl glutamic acid, acylglutamic acid and dilauroyl glutamic acid; glycine derivatives such as lauroyl glycine, myristoyl glycine, palmitoyl glycine, palmitoyl methylglycine, cocoyl acylglycine and cocoyl glycine; alanine derivatives such as lauroyl methylalanine, myristoyl methylalanine, cocoyl alanine and cocoyl methylalanine; lysine derivatives such as lauroyl lysine, myristoyl lysine, palmitoyl lysine, stearoyl lysine, oleoyl lysine and acylated lysines; aspartic acid derivatives such as lauroyl aspartic acid, myristoyl aspartic acid, palmitoyl aspartic acid and stearoyl aspartic acid; taurine derivatives such as lauroyl taurine, lauroyl methyltaurine, myristoyl taurine, myristoyl methyltaurine, palmitoyl taurine, palmitoyl methyltaurine, stearoyl taurine and stearoyl methyltaurine; and proline derivatives such as lauroyl proline, myristoyl proline and palmitoyl proline. N-acyl derivatives of amino acids are especially preferred.

The amino acid derivative salt is preferably a monovalent salt, and more preferably a monovalent metal salt. Specific examples include the following amino acid derivative salts having a hydrocarbon group: sarcosine derivative salts such as potassium capryloyl sarcosinate, sodium capryloyl sarcosinate, potassium lauroyl sarcosinate, sodium lauroyl sarcosinate, potassium myristoyl sarcosinate, sodium myristoyl sarcosinate, potassium palmitoyl sarcosinate, sodium palmitoyl sarcosinate, potassium cocoyl sarcosinate and sodium cocoyl sarcosinate; glutamic acid derivative salts such as potassium capryloyl glutamate, sodium capryloyl glutamate, potassium lauroyl glutamate, sodium lauroyl glutamate, potassium myristoyl glutamate, sodium myristoyl glutamate, sodium palmitoyl glutamate, potassium palmitoyl glutamate, potassium stearoyl glutamate, sodium stearoyl glutamate, potassium cocoyl acylglutamate, sodium cocoyl acylglutamate, potassium cocoyl glutamate, sodium cocoyl glutamate, potassium acylglutamate, sodium acylglutamate, sodium dilauroyl glutamate lysine and sodium polyglutamate; glycine derivative salts such as potassium lauroyl glycine, sodium lauroyl glycine, potassium myristoyl glycine, sodium myristoyl glycine, sodium palmitoyl glycine, sodium palmitoyl methylglycine, potassium cocoyl acylglycine, sodium cocoyl acylglycine, potassium cocoyl glycine and sodium cocoyl glycine; alanine derivative salts such as potassium lauroyl methylalanine, sodium lauroyl methylalanine, sodium myristoyl methylalanine, sodium cocoyl alanine and sodium cocoyl methylalanine; aspartic acid derivative salts such as potassium lauroyl aspartate, sodium lauroyl aspartate, potassium myristoyl aspartate, sodium myristoyl aspartate, potassium palmitoyl aspartate, sodium palmitoyl aspartate, potassium stearoyl aspartate and sodium stearoyl aspartate; taurine derivative salts such as sodium lauroyl taurate, potassium lauroyl taurate, sodium lauroyl methyltaurate, potassium myristoyl taurate, sodium myristoyl taurate, sodium myristoyl methyltaurate, potassium palmitoyl taurate, sodium palmitoyl taurate, potassium palmitoyl methyltaurate, sodium palmitoyl methyltaurate, potassium stearoyl taurate, sodium stearoyl taurate and sodium stearoyl methyltaurate; and proline derivative salts such as sodium lauroyl proline, sodium myristoyl proline and sodium palmitoyl proline. N-acyl derivative salts of amino acids are especially preferred. The amino acid derivative is preferably a sarcosine derivative having a monovalent hydrocarbon group of 3 or more carbon atoms or a glutamic acid derivative having a monovalent hydrocarbon group of 3 or more carbon atoms.

The amino acid derivative and salt thereof is preferably one having a monovalent hydrocarbon group of 6 to 30 carbon atoms, more preferably one having a monovalent hydrocarbon group of 10 to 25 carbon atoms, and still more preferably one having a monovalent hydrocarbon group of 12 to 20 carbon atoms.

The sulfonic acid is preferably one having from 6 to 30 carbon atoms, more preferably one having from 10 to 25 carbon atoms, and even more preferably one having from 12 to 20 carbon atoms. Specific examples include alkyl sulfonic acids such as lauryl sulfonic acid, myristyl sulfonic acid, cetyl sulfonic acid, stearyl sulfonic acid and oleyl sulfonic acid; dodecylbenzene sulfonic acid; dialkyl succinate sulfonic acids; monoalkyl succinate sulfonic acids; naphthalene sulfonic acid; olefin sulfonic acids; alkyl isethionic acids such as lauroyl isethionic acid, myristoyl isethionic acid, palmitoyl isethionic acid and stearoyl isethionic acid; and dialkyl sulfosuccinic acids such as dihexyl sulfosuccinic acid, dioctyl sulfosuccinic acid, didecyl sulfosuccinic acid and diisobutyl sulfosuccinic acid. Of these, sulfonic acids having an alkyl group of 12 to 20 carbon atoms are especially preferred.

The sulfonic acid salt is preferably a monovalent salt, and more preferably an ammonium salt or a monovalent metal salt. Specific examples include alkyl sulfonic acid salts such as sodium lauryl sulfonate, ammonium lauryl sulfonate, sodium myristyl sulfonate, ammonium myristyl sulfonate, sodium cetyl sulfonate, ammonium cetyl sulfonate, sodium stearyl sulfonate, ammonium stearyl sulfonate, sodium oleyl sulfonate and ammonium oleyl sulfonate; dodecylbenzene sulfonic acid salts such as ammonium dodecylbenzene sulfonate and sodium dodecylbenzene sulfonate; dialkyl succinate sulfonic acid salts such as sodium dialkyl succinate sulfonates; monoalkyl succinate sulfonic acid salts such as disodium monoalkyl succinate sulfonates; naphthalene sulfonic acid formalin condensate salts such as sodium salts of naphthalene sulfonic acid formalin condensates; olefin sulfonic acid salts such as sodium olefin sulfonates and ammonium olefin sulfonates; alkyl isethionic acid salts such as potassium lauroyl isethionate, sodium lauroyl isethionate, sodium myristoyl isethionate, sodium palmitoyl isethionate and sodium stearoyl isethionate; and dialkyl sulfosuccinic acid salts such as sodium dihexyl sulfosuccinate, sodium dioctyl sulfosuccinate, ammonium dioctyl sulfosuccinate, sodium didecyl sulfosuccinate and sodium diisobutyl sulfosuccinate. Of these, sulfonic acid salts having an alkyl group of 12 to 20 carbon atoms are especially preferred.

Examples of sulfate esters include alkyl sulfate esters, polyoxyethylene aryl ether sulfate esters, polyoxyethylene alkyl ether sulfate esters, polyoxyalkylene alkyl ether sulfate esters, polyoxyalkylene alkenyl ether sulfate and polyoxyethylene castor oil ether sulfate esters.

The alkyl sulfate ester is preferably one having an alkyl group of 6 to 30 carbon atoms, more preferably one having an alkyl group of 10 to 25 carbon atoms, and still more preferably one having an alkyl group of 12 to 20 carbon atoms. Specific examples include lauryl sulfuric acid, myristyl sulfuric acid, cetyl sulfuric acid, stearyl sulfuric acid and oleyl sulfuric acid.

The polyoxyethylene aryl ether sulfate ester is preferably one whose salts have a hydrophilic-lipophilic balance (HLB) of 16 or less, and more preferably one whose salts have an HLB of 12 or less. Examples include polyoxyethylene polycyclic phenyl ether sulfate esters and polyoxyethylene aryl ether sulfate esters.

The polyoxyethylene alkyl ether sulfate ester is preferably one whose salts have an HLB of 16 or less, and more preferably one whose salts have an HLB of 12 or less. Specific examples include sodium polyoxyethylene lauryl ether sulfate, sodium polyoxyethylene myristyl ether sulfate, polyoxyethylene cetyl ether sulfuric acid, polyoxyethylene stearyl ether sulfuric acid and polyoxyethylene oleyl ether sulfuric acid.

The polyoxyalkylene alkyl ether sulfate ester is preferably one whose salts have an HLB of 16 or less, and more preferably one whose salts have an HLB of 12 or less. Specific examples include the sulfate esters of polyoxyethylene-polyoxypropylene block copolymers, the sulfate esters of polyoxyethylene-polyoxybutylene block copolymers and the sulfate esters of alkyl ethers of polyoxyethylene-polyoxypropylene block copolymers. The polyoxyalkylene alkenyl ether sulfate is preferably one whose salts have an HLB of 16 or less, and more preferably one whose salts have an HLB of 12 or less. Specific examples include sulfate esters of alkenyl ethers of polyoxyethylene-polyoxyalkylene block copolymers. The polyoxyethylene castor oil ether sulfate ester is preferably one whose salts have an HLB of 16 or less, and more preferably one whose salts have an HLB of 12 or less.

Examples of the sulfate ester salts include alkyl sulfate ester salts, polyoxyethylene aryl ether sulfate ester salts, polyoxyethylene alkyl ether sulfate ester salts, polyoxyalkylene alkyl ether sulfate ester salts, polyoxyalkylene alkenyl ether sulfate salts and polyoxyethylene castor oil ether sulfate ester salts. The sulfate ester salts are preferably monovalent salts, and more preferably ammonium salts or monovalent metal salts.

The alkyl sulfate ester salt is preferably one having an alkyl group of 6 to 30 carbon atoms, more preferably one having an alkyl group of 10 to 25 carbon atoms, and even more preferably one having an alkyl group of 12 to 20 carbon atoms. Specific examples include potassium lauryl sulfate, sodium lauryl sulfate, ammonium lauryl sulfate, potassium myristyl sulfate, sodium myristyl sulfate, ammonium myristyl sulfate, sodium cetyl sulfate, ammonium cetyl sulfate, sodium stearyl sulfate, ammonium stearyl sulfate, sodium oleyl sulfate and ammonium oleyl sulfate.

The polyoxyethylene aryl ether sulfate ester salt is preferably one having a hydrophilic-lipophilic balance (HLB) of 16 or less, and more preferably one having an HLB of 12 or less. Examples include polyoxyethylene polycyclic phenyl ether sulfate ester salts such as sodium polyoxyethylene polycyclic phenyl ether sulfate esters and ammonium polyoxyethylene polycyclic phenyl ether sulfate esters; and sodium polyoxyethylene aryl ether sulfate esters.

The polyoxyethylene alkyl ether sulfate ester salt is preferably one having an HLB of 16 or less, and more preferably one having an HLB of 12 or less. Examples include polyoxyethylene alkyl ether sulfate esters, sodium polyoxyethylene lauryl ether sulfate, ammonium polyoxyethylene lauryl ether sulfate, sodium polyoxyethylene myristyl ether sulfate, ammonium polyoxyethylene myristyl ether sulfate, sodium polyoxyethylene cetyl ether sulfate, ammonium polyoxyethylene cetyl ether sulfate, sodium polyoxyethylene stearyl ether sulfate, ammonium polyoxyethylene stearyl ether sulfate, sodium polyoxyethylene oleyl ether sulfate and ammonium polyoxyethylene oleyl ether sulfate.

The polyoxyalkylene alkyl ether sulfate ester salt is preferably one having an HLB of 16 or less, and more preferably one having an HLB of 12 or less. Examples include sulfate ester sodium salts of polyoxyethylene-polyoxypropylene block copolymers, sulfate ester sodium salts of polyoxyethylene-polyoxybutylene block copolymers and sulfate ester sodium salts of alkyl ethers of polyoxyethylene-polyoxypropylene block copolymers. The polyoxyalkylene alkenyl ether sulfate salts are preferably ones having an HLB of 16 or less, and more preferably ones having an HLB of 12 or less. Examples include sulfate ester ammonium salts of alkenyl ethers of polyoxyethylene-polyoxyalkylene block copolymers. The polyoxyethylene castor oil ether sulfate esters and salts thereof are preferably ones having an HLB of 16 or less, and more preferably ones having an HLB of 12 or less. Examples include polyoxyethylene castor oil ether sulfate esters and ammonium polyoxyethylene castor oil ether sulfate esters.

The phosphate esters are exemplified by alkyl phosphate esters. The alkyl phosphate ester is preferably one having an alkyl group of 6 to 30 carbon atoms, more preferably one having an alkyl group of 10 to 25 carbon atoms, and even more preferably one having an alkyl group of 12 to 20 carbon atoms. Specific examples include octyl phosphoric acid, nonyl phosphoric acid, decyl phosphoric acid, undecyl phosphoric acid, lauryl phosphoric acid, myristyl phosphoric acid, cetyl phosphoric acid and stearyl phosphoric acid.

The phosphate ester salts are exemplified by alkyl phosphate ester salts. The alkyl phosphate ester salt is preferably one having an alkyl group of 6 to 30 carbon atoms, more preferably one having an alkyl group of 10 to 25 carbon atoms, and even more preferably one having an alkyl group of 12 to 20 carbon atoms. Specific examples include octyl phosphate salts such as potassium octyl phosphate, nonyl phosphate salts such as potassium nonyl phosphate, decyl phosphate salts such as potassium decyl phosphate, undecyl phosphate salts such as potassium undecyl phosphate, lauryl phosphate salts such as potassium lauryl phosphate, myristyl phosphate salts such as potassium myristyl phosphate, cetyl phosphate salts such as potassium cetyl phosphate and sodium cetyl phosphate, and stearyl phosphate salts such as potassium stearyl phosphate.

Given the use environment, the marine biodegradable polymer compound of the invention is preferably solid at normal temperatures. In particular, it is preferably a powder having an average particle size of from 0.1 to 10,000 $\mu$m, and preferably a thermoplastic powder having a melting temperature of between 60°C and 200°C. The average particle size in this invention is the volume mean particle size (MV) determined by the laser diffraction scattering method or the average of values measured under a microscope.

The shapes of the powder particles are not particularly limited. For example, the particles may be spherical, approximately spherical, flattened, recessed or other physically or chemically shape-controlled particles, or may be physically pulverized particles. From the standpoint of the feel, slip characteristics and control of the particle size distribution, spherical, approximately spherical, flattened, recessed or other physically or chemically shape-controlled particles are preferred. Particles composed of the marine biodegradable polymer compound may be rendered into the shape of pellets by compression molding or melt molding.

Polymer Compound B is preferably hydrophobic. When a water droplet is deposited on a melt-molded body of particles of the powder, the contact angle after 30 seconds have elapsed is preferably 50° or more. As used herein, "melt-molded body" refers to a body of the powder particles shaped into a film or plate of a certain fixed thickness using a hot press or the like, or to a sheet for contact angle measurement that has been obtained by heating and melting the resin and using a mold or the like to cast the melt into a predetermined shape. The hydrophobization effect and the solubility and degradability in seawater are fully exhibited in this case. To readily obtain these advantageous effects, the contact angle is, in order of increasing preference, 60° or more, 70°C or more, or 80°C or more. The contact angle has no particular upper limit, although the practical value is preferably 170° or less, more preferably 160° or less, even more preferably 150° or less, and still more preferably 140° or less. Taking into account the practical hydrophobic effect and the time required for dissolution and biodegradation in seawater, the contact angle preferably satisfies the range of 50° to 160°, more preferably satisfies the range of 50° to 150°, even more preferably satisfies the range of 60° to 140°, and most preferably satisfies the range of 70° to 130°. The contact angle can be measured using a contact angle meter (Drop Master 300, from Kyowa Interface Science Co., Ltd.).

[Resin Composition]

The marine biodegradable polymer compound of the invention can function as a marine biodegradation promoter. That is, by using the marine biodegradable polymer compound of the invention in combination with a resin, especially a biodegradable resin, a resin composition whose biodegradability in the ocean is accelerated can be obtained. It is also possible to use a plurality of resin types for the purpose of adjusting the properties and handleability of the resin composition. As used herein, "biodegradable resin" refers to a resin which decomposes under the action of microorganisms in the natural world, ultimately breaking down into inorganic matter such as water and carbon dioxide.

Examples of the resin include polyethylene, polyester, polypropylene, polyethylene terephthalate, vinyl chloride, polystyrene, polyurethane, epoxy resins, chlorinated polyethylene resins, chlorinated polypropylene resins, modified nylon resins, phenolic resins, silicone resins, polyvinyl acetate, ethylene-vinyl acetate copolymers, polyvinyl chloride, polyvinylidene chloride, styrene-maleic acid resins, styrene-butadiene resins, butadiene resins, acrylonitrile-butadiene resins, poly(meth)acrylonitrile resins, (meth)acrylamide resins, bio-PETs, biopolyamides, biopolycarbonates, biopolyurethanes, polyvinyl alcohol, polybutylene adipate/terephthalate, polyethylene terephthalate succinate, biopolybutylene succinate, poly(lactic acid) blends, starch-blended polyester resins, polybutylene terephthalate succinate, polylactic acid and polyhydroxyalkanoates. From the standpoint of reducing the burden on the environment, resins having a high biodegradability are especially preferred.

Examples of such biodegradable resins include resins the raw materials for which are from petroleum, such as polycaprolactone, poly(caprolactone/butylene succinate), polybutylene succinate (PBS), poly(butylene succinate/adipate) (PBSA), poly(butylene adipate/terephthalate) (PBAT), poly(butylene succinate/carbonate), polyethylene terephthalate copolymer, polyethylene terephthalate/succinate), poly(tetramethylene adipate/terephthalate), polyethylene succinate, polyvinyl alcohol, polyglycolic acid and glycolic acid/caprolactone copolymers; resins the raw materials for which are partly from biomass, such as (polylactic acid/polybutylene succinate-based) block copolymers, (polylactic acid/polycaprolactone) copolymers, (polylactic acid/polyether) copolymers, polylactic acid-blended PBAT, lactic acid/glycolic acid copolymers, biopolybutylene succinate, poly(butylene succinate/adipate), starch-blended polyester resins and poly(butylene terephthalate succinate); resins for which the raw materials are 100% biomass, including polyhydroxyalkanoates such as polyhydroxybutyrate, polyhydroxyvalerate, polyhydroxycaprylate, poly(hydroxybutyrate/hydroxyhexanoate) (PHBH), poly(3-hydroxybutyrate/4-hydroxybutyrate) (P3HB4HB) and poly(hydroxybutyrate/hydroxyvalerate) (PHBV), and also polylactic acid (PLA); and resins from naturally occurring macromolecules such as cellulose, cellulose acetate, cellulose ester resins, starches, esterified starches and chitosan.

Of these, it is preferable to combine a resin which, as a biodegradable resin, has biodegradability in soil or compost but for which the biodegradability in the ocean is poor, such as one which includes biodegradable resin ingredients selected from polycaprolactone, bio(PBS), PBSA, PBAT, poly(tetramethylene adipate/terephthalate), poly(butylene succinate/carbonate), polyhydroxyalkanoates such as PHBH and PHBV, PLA, and resins from naturally occurring macromolecules such as cellulose, starch and chitosan, with the marine biodegradation promoter. The biodegradable resin is more preferably PBSA, PBS, PBAT, PLA or a resin from starch.

From the standpoint of reducing the environmental burden, the raw material for the resin which is combined with the marine biodegradation promoter is preferably from biomass, with most preferably 100% being raw material from biomass.

The resin composition of the invention may include a solvent. The solvent may be one which dissolves the resin serving as the matrix while leaving the marine biodegradable polymer compound undissolved as particles, or may be one which dissolves both the resin and the marine biodegradable polymer compound. By suitably adjusting these ingredients, the resin composition may be used as a molded body obtained by film formation such as by casting, or as a coating, ink, surface treatment agent or the like. Examples of preferred solvents include water, hexane, heptane, N-methylpyrrolidone, dimethylformamide, dimethylacetamide, dimethylsulfoxide, dimethylsulfone, acetone, methyl ethyl ketone, diethyl ketone, acetophenone, dimethyl ether, dipropyl ether, tetrahydrofuran, chloroform, methylene chloride, trichloroethylene, ethylene dichloride, dichloroethane, tetrachloroethane, chlorobenzene, methanol, ethanol, n-propanol, isopropanol, butanol, pentanol, methyl glycol, methyl triglycol, hexyl glycol, phenyl glycol, ethylene glycol, propylene glycol, phenol, cresol, polyethylene glycol, benzene, toluene and xylene. One of these may be used alone or two or more may be used in admixture.

When using a solvent, the combined concentration of resin and marine biodegradable polymer compound in the resin composition is preferably from 0.5 to 90 wt%, more preferably from 1 to 80 wt%, even more preferably from 5 to 60 wt%, and most preferably from 10 to 50 wt%. The proportion of marine biodegradable polymer compound relative to the resin, expressed as a weight ratio, is preferably from 99:1 to 10:90, more preferably from 97:3 to 40:60, even more preferably from 95:5 to 50:50, and most preferably from 90:10 to 60:40.

The resin composition of the invention need not include a solvent. In this case, the resin may be melted under applied heat and marine biodegradation promoter that does not melt therein may be added and mixed with the molten resin, or the resin and the marine biodegradable polymer compound may both be melted and mixed together. In cases where the marine biodegradable polymer compound is melted with heat together with the resin and mixed, it is preferable for the marine biodegradable polymer compound to have a softening point or melting point suitable for the melting temperature of the resin. The marine biodegradable polymer compound is a solid at room temperature; more specifically, it has a lower limit value for the softening point or melting point of, in order of increasing preference, 50°C or more, 60°C or more, 80°C or more, 100°C or more, or 120°C or more; and an upper limit value of, in order of increasing preference, 300°C or less, 250°C or less, 200°C or less, or 180°C or less. In cases where the resin is a biodegradable resin, it has a softening point or melting point within a range of preferably from 60 to 200°C, more preferably from 70 to 180°C, and even more preferably form 80 to 160°C.

The content of the marine biodegradable polymer compound within the resin composition of the invention is preferably from 1 to 50 wt%, more preferably from 3 to 50 wt%, even more preferably from 5 to 45 wt%, still more preferably from 7 to 40 wt%, and most preferably from 10 to 35 wt%. The resin content is preferably from 50 to 99 wt%, more preferably from 50 to 97 wt%, even more preferably from 55 to 95 wt%, still more preferably from 40 to 93 wt%, and most preferably from 65 to 90 wt%. Inclusion of the marine biodegradable polymer compound within this range enables it to be utilized as a marine biodegradation promoter that accelerates biodegradation in seawater while maintaining the properties of the biodegradable resin.

The resin composition of the invention may optionally include additives such as antioxidants, parting agents, release agents, surface modifiers, hydrophobizing agents, water repelling agents, hydrophilizing agents, dyes and pigments, colorants, heat stabilizers, light stabilizers, weatherability enhancers, antistatic agents, anti-fogging agents, lubricants, anti-blocking agents, hardeners, softeners, compatibilizers, flame retardants, flow enhancers, plasticizers, dispersants, antimicrobial agents, fillers and metal inactivators. The content of these additives, although not particularly limited so long as there is no loss in the advantageous effects of the invention, is preferably from about 0.1 to about 50 parts by weight per 100 parts by weight of the resin.

In cases where the resin composition includes a solvent, the composition may be prepared by, for example, adding the resin, the marine biodegradable polymer compound and the optional additives to the solvent, either at the same time or in any suitable order, and mixing. Alternatively, in cases where the resin composition does not include a solvent, the resin may be melted and the marine biodegradable polymer compound and the optional additives may be added thereto, either at the same time or in any suitable order, and mixed; or the resin and the marine biodegradation promoter may be heated, melted together and mixed, and the optional additives then added and mixed therewith.

[Molded Body]

A molded body composed of the marine biodegradation promoter dispersed or dissolved in the resin can be obtained by molding the resin composition. When the resin composition includes a solvent, molding may be carried out using the resin composition directly as is. When the resin composition does not include a solvent, the resin within the resin composition, or both the resin and the marine biodegradation promoter, may be melted by applying heat and molding subsequently carried out.

The molded body may be in the shape of a film, fibers, a sheet or an expansion-molded body, or may have some other shape according to the intended use. The molding method is not particularly limited; use can be made of various methods known to the art. Examples of such methods include blow molding, injection molding, extrusion, compression molding, melt extrusion, film casting and calendering.

EXAMPLES

Synthesis Examples, Examples and Comparative Examples are given below by way of illustration, although the invention is not limited by these Examples.

The particle size distributions and volume mean particle sizes (MV) in the Examples and Comparative Examples were measured using the MICROTRACK MT3000 (MicrotracBEL Corp.). The molecular weights are absolute molecular weights, which were measured by the static light-scattering method. Specifically, the scattered light intensities of four or more samples of differing concentrations were measured using a nanoparticle analyzer (nano Partica SZ-100, from Horiba, Ltd.) and the molecular weight was determined with a Debye plot. The value of the refractive index concentration increment (dn/dc) used when calculating the absolute molecular weight was measured with a differential refractometer (DRM-3000, from Otsuka Electronics Co., Ltd.). Measurement was carried out using solvents capable of dissolving the respective polymer compounds.

[Example 1-1] Synthesis of Polyester-Based Polymer Compound Having Monovalent Metal Ions (Polymer Compound A1)

A 3,000 mL reactor was charged with 1,000.0 g of polyester diol (Kuraray Polyol P-1010, from Kuraray Co., Ltd.), 210.0 g of succinic anhydride, 233.0 g of sodium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A1, a polyester-based polymer in which both ends are substituted with -COONa.

[Example 1-2] Synthesis of Polyester-Based Polymer Compound Having Monovalent Metal Ions (Polymer Compound A2)

A 3,000 mL reactor was charged with 1,000.0 g of polyester diol (Kuraray Polyol P-1010, from Kuraray Co., Ltd.), 105.0 g of succinic anhydride, 127.0 g of sodium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A2, a polyester-based polymer in which both ends are substituted with -COONa.

[Example 1-3] Synthesis of Polycaprolactone-Based Polymer Compound Having Monovalent Metal Ions (Polymer Compound A3)

A 3,000 mL reactor was charged with 1,000.0 g of caprolactone diol (Placcel 210B, from Daicel Corporation), 210.0 g of succinic anhydride, 233.0 g of sodium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A3, a polycaprolactone-based polymer in which both ends are substituted with -COONa.

[Example 1-4] Synthesis of Polycaprolactone-Based Polymer Compound Having Monovalent Metal Ions (Polymer Compound A4)

A 3,000 mL reactor was charged with 1,000.0 g of caprolactone diol (Placcel 220B, from Daicel Corporation), 105.0 g of succinic anhydride, 127.0 g of sodium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A4, a polycaprolactone-based polymer in which both ends are substituted with -COONa.

[Example 1-5] Synthesis of Polypropylene Glycol-Based Polymer Compound Having Monovalent Metal Ions (Polymer Compound A5)

A 3,000 mL reactor was charged with 1,000.0 g of polypropylene glycol (PPG 1000, from Fujifilm Wako Pure Chemical Corporation, Ltd.), 206.0 g of maleic anhydride, 304.0 g of potassium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A5, a polypropylene glycol-based polymer in which both ends are substituted with -COOK.

[Example 1-6] Synthesis of Polycarbonate-Based Polymer Compound Having Monovalent Metal Ions (Polymer Compound A6)

A 3,000 mL reactor was charged with 1,000.0 g of polycarbonate (Kuraray Polyol C-590, from Kuraray Co., Ltd.), 410.0 g of succinic anhydride, 580.0 g of sodium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A6, a polycarbonate-based polymer in which both ends are substituted with -COOK.

[Example 1-7] Synthesis of Trifunctional Polyester-Based Polymer Compound Having Monovalent Metal Ions (Polymer Compound A7)

A 3,000 mL reactor was charged with 1,000.0 g of trifunctional polyester (Kuraray Polyol F-1010, from Kuraray Co., Ltd.), 306.0 g of succinic anhydride, 324.4 g of sodium carbonate and 500.0 g of acetonitrile, and the ingredients were stirred 4 hours at 60°C using a stirrer. After stirring, the system was cooled to room temperature and precipitate was removed by filtration. The resulting filtrate was concentrated using an evaporator and solvent was removed under reduced pressure, giving Polymer Compound A7, a trifunctional polyester-based polymer in which both ends are substituted with -COOK.

[Example 2-1] Synthesis of Polyester-Based Polymer Particles Having Ionic Bonds (AP1 Particles)

A 1,000 mL reactor was charged with the ingredients shown below and a stirrer was used at 60°C to effect dissolution.

| | |
|---|---|
| Polymer Compound A1 | 250.0 g |
| Sodium bicarbonate | 35.0 g |
| Deionized water | 125.0 g |

Next, 125.0 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP1 particles. The MV of the AP1 particles was 165 μm.

EP 4 442 728 A1

The AP1 particles were analyzed by NMR and IR spectroscopy, as a result of which they were confirmed to be the target compound in which divalent anions from Polymer Compound A1 are bonded through calcium ions. The absolute molecular weight of this compound was measured and found to be 52,400, and the theoretical number of structural units was 41.

[Example 2-2] Synthesis of Polyester-Based Polymer Particles Having Ionic Bonds (AP2 Particles)

A 1,000 mL reactor was charged with the ingredients shown below and a stirrer was used at 60°C to effect dissolution.

| | |
|---|---|
| Polymer Compound A2 | 250.0 g |
| Sodium bicarbonate | 17.5 g |
| Deionized water | 125.0 g |

Next, 63.0 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP2 particles. The MV of the AP2 particles was 274 μm.

The AP2 particles were analyzed by NMR and IR spectroscopy, as a result of which they were confirmed to be the target compound in which divalent anions from Polymer Compound A2 are bonded through calcium ions. The absolute molecular weight of this compound was measured and found to be 71,400, and the theoretical number of structural units was 30.

[Example 2-3] Synthesis of Polycaprolactone-Based Polymer Particles Having Ionic Bonds (AP3 Particles)

A 1,000 mL reactor was charged with the ingredients shown below and a stirrer was used at 70°C to effect dissolution.

| | |
|---|---|
| Polymer Compound A3 | 250.0 g |
| Sodium bicarbonate | 35.0 g |
| Deionized water | 125.0 g |

Next, 125.0 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP3 particles. The MV of the AP3 particles was 89 μm.

The AP3 particles were analyzed by NMR and IR spectroscopy, as a result of which they were confirmed to be the target compound in which divalent anions from Polymer Compound A3 are bonded through calcium ions. The absolute molecular weight of this compound was measured and found to be 32,500, and the theoretical number of structural units was 25.

[Example 2-4] Synthesis of Polycaprolactone-Based Polymer Particles Having Ionic Bonds (AP4 Particles)

A 1,000 mL reactor was charged with the ingredients shown below and a stirrer was used at 80°C to effect dissolution.

| | |
|---|---|
| Polymer Compound A4 | 250.0 g |
| Sodium bicarbonate | 17.5 g |
| Deionized water | 125.0 g |

Next, 63.0 g of a 20.0 wt% aqueous solution of magnesium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP4 particles. The MV of the AP4 particles was 124 μm.

The AP4 particles were analyzed by NMR and IR spectroscopy, as a result of which they were confirmed to be the target compound in which divalent anions from Polymer Compound A4 are bonded through calcium ions. The absolute molecular weight of this compound was measured and found to be 62,300, and the theoretical number of structural units was 26.

[Example 2-5] Synthesis of Polypropylene Glycol-Based Polymer Particles Having Ionic Bonds (AP5 Particles)

A 3,000 mL reactor was charged with the ingredients shown below and a stirrer was used at 60°C to effect dissolution.

| | |
|---|---|
| Polymer Compound A5 | 100.0 g |
| Sodium myristoyl sarcosinate | 63.1 g |
| Deionized water | 147.2 g |
| Ethanol | 100.0 g |

Next, 143.9 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP5 particles. The MV of the AP5 particles was 136 μm.

The AP5 particles were analyzed by NMR and IR spectroscopy, as a result of which they were confirmed to be the target compound in which divalent anions from Polymer Compound A5 are bonded through calcium ions and both ends of which are capped with myristoyl sarcosine anions. The absolute molecular weight of this compound was measured and found to be 12,300, and the theoretical number of structural units was 9.

[Example 2-6] Synthesis of Polyester-Based Polymer Particles Having Ionic Bonds (AP6 Particles)

A 3,000 mL reactor was charged with the ingredients shown below and a stirrer was used at 60°C to effect dissolution.

| | |
|---|---|
| Polymer Compound A1 | 100.0 g |
| Sodium palmitoyl sarcosinate | 42.1 g |
| Deionized water | 168.4 g |
| Ethanol | 233.3 g |

Next, 196.5 g of a 20.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP6 particles. The MV of the AP6 particles was 153 μm.

The AP6 particles were analyzed by NMR and IR spectroscopy, as a result of which they were confirmed to be the target compound in which divalent anions from Polymer Compound A1 are bonded through calcium ions and both ends of which are capped with palmitoyl sarcosine anions. The absolute molecular weight of this compound was measured and found to be 18,900, and the theoretical number of structural units was 14.

[Example 2-7] Synthesis of Polyester-Based Polymer Particles Having Ionic Bonds (AP7 Particles)

A 3,000 mL reactor was charged with the ingredients shown below and a stirrer was used at 60°C to effect dissolution.

| | |
|---|---|
| Polymer Compound A2 | 100.0 g |
| Sodium stearoyl sarcosinate | 77.5 g |
| Deionized water | 1,472.5 g |
| Ethanol | 233.3 g |

Next, 237.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP7 particles. The MV of the AP7 particles was 82 $\mu$m.

The AP7 particles were analyzed by NMR and IR spectroscopy, as a result of which they were confirmed to be the target compound in which divalent anions from Polymer Compound A2 are bonded through calcium ions and both ends of which are capped with stearoyl glutamic acid anions. The absolute molecular weight of this compound was measured and found to be 21,400, and the theoretical number of structural units was 9.

[Example 2-8] Synthesis of Polycaprolactone-Based Polymer Particles Having Ionic Bonds (AP8 Particles)

A 5,000 mL reactor was charged with the ingredients shown below and a stirrer was used at 60°C to effect dissolution.

| | |
|---|---|
| Polymer Compound A3 | 100.0 g |
| Sodium laurate | 44.6 g |
| Deionized water | 462.7 g |
| Ethanol | 115.7 g |

Next, 196.0 g of a 15.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP8 particles. The MV of the AP8 particles was 59 $\mu$m.

The AP8 particles were analyzed by NMR and IR spectroscopy, as a result of which they were confirmed to be the target compound in which divalent anions from Polymer Compound A3 are bonded through calcium ions and both ends of which are capped with lauric acid anions. The absolute molecular weight of this compound was measured and found to be 17,800, and the theoretical number of structural units was 13.

[Example 2-9] Synthesis of Polycaprolactone-Based Polymer Particles Having Ionic Bonds (AP9 Particles)

Within a 3,000 mL reactor, 186.3 g of 1-dodecanol was dissolved in 500 g of THF, 2.4 g of sodium hydride was added thereto and the reactor contents were stirred for 1 hour at 0°C. Next, 342.42 g of $\varepsilon$-caprolactam was gradually added dropwise and the reactor contents were stirred for 4 hours at 0°C, following which the temperature was raised to room temperature and stirring was continued overnight. After the completion of stirring, 100.0 g of succinic anhydride was added, the system was stirred 4 hours at 60°C and then cooled to room temperature, following which precipitate was removed by filtration. The resulting filtrate was concentrated using an evaporator and solvent was removed under reduced pressure, giving Polycaprolactone Derivative B substituted at both ends with -COONa (Mn = 650).

A 3,000 mL reactor was charged with the ingredients shown below and a stirrer was used at 60°C to effect dissolution.

| | |
|---|---|
| Polymer Compound A4 | 100.0 g |
| Polycaprolactone Derivative B | 29.0 g |
| Deionized water | 217.6 g |
| Ethanol | 217.6 g |

Next, 237.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP9 particles. The MV of the AP9 particles was 101 $\mu$m.

The AP9 particles were analyzed by NMR and IR spectroscopy, as a result of which they were confirmed to be the target compound in which divalent anions from Polymer Compound A4 are bonded through calcium ions and both ends of which are capped with anions from Polycaprolactone Derivative B. The absolute molecular weight of this compound was measured and found to be 27,600, and the theoretical number of structural units was 11.

[Example 2-10] Synthesis of Mixed Polymer Particles Having Ionic Bonds (AP10 Particles)

A 3,000 mL reactor was charged with the ingredients shown below and a stirrer was used at 60°C to effect dissolution.

| | |
|---|---|
| Polymer Compound A2 | 60.0 g |
| Polymer Compound A5 | 34.0 g |
| Sodium myristoyl sarcosinate | 34.3 g |
| Deionized water | 202.0 g |
| Ethanol | 282.0 g |

Next, 163.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP10 particles. The MV of the AP10 particles was 149 $\mu$m.

The AP10 particles were analyzed by NMR and IR spectroscopy, as a result of which they were confirmed to be the target compound in which divalent anions from Polymer Compounds A2 and A5 are bonded through calcium ions and both ends of which are capped with myristoyl sarcosine anions. The absolute molecular weight of this compound was measured and found to be 13,700, and the theoretical number of structural units was 7.

[Example 2-11] Synthesis of Mixed Polymer Particles Having Ionic Bonds (AP11 Particles)

A 3,000 mL reactor was charged with the ingredients shown below and a stirrer was used at 60°C to effect dissolution.

| | |
|---|---|
| Polymer Compound A1 | 30.0 g |
| Polymer Compound A4 | 54.1 g |
| Sodium dodecanoyl sarcosinate | 17.7 g |
| Deionized water | 190.8 g |
| Ethanol | 126.2 g |

Next, 115.0 g of a 10.0 wt% aqueous solution of magnesium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP11 particles. The MV of the AP11 particles was 77 $\mu$m.

The AP11 particles were analyzed by NMR and IR spectroscopy, as a result of which they were confirmed to be the target compound in which divalent anions from Polymer Compounds A1 and A4 are bonded through magnesium ions and both ends of which are capped with dodecanoyl sarcosine anions. The absolute molecular weight of this compound was measured and found to be 22,800, and the theoretical number of structural units was 12.

[Example 2-12] Synthesis of Mixed Polymer Particles Having Ionic Bonds (AP12 Particles)

A 5,000 mL reactor was charged with the ingredients shown below and a stirrer was used at 60°C to effect dissolution.

| | |
|---|---|
| Polymer Compound A2 | 40.0 g |
| Polymer Compound A6 | 13.8 g |
| Sodium stearoyl glutamate | 23.3 g |
| Deionized water | 753.4 g |
| Ethanol | 125.5 g |

Next, 95.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP12 particles. The MV of the AP12 particles was 125 μm.

The AP12 particles were analyzed by NMR and IR spectroscopy, as a result of which they were confirmed to be the target compound in which divalent anions from Polymer Compounds A2 and A6 are bonded through calcium ions and both ends of which are capped with stearoyl glutamic acid anions. The absolute molecular weight of this compound was measured and found to be 21,500, and the theoretical number of structural units was 13.

[Example 2-13] Synthesis of Mixed Polymer Particles Having Ionic Bonds (AP13 Particles)

A 3,000 mL reactor was charged with the ingredients shown below and a stirrer was used at 60°C to effect dissolution.

| | |
|---|---|
| Polymer Compound A5 | 40.0 g |
| Polymer Compound A6 | 24.4 g |
| Sodium dodecanoyl sarcosinate | 36.9 g |
| Deionized water | 147.6 g |
| Isopropyl alcohol | 96.6 g |

Next, 154.0 g of a 15.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP13 particles. The MV of the AP13 particles was 93 μm.

The AP13 particles were analyzed by NMR and IR spectroscopy, as a result of which they were confirmed to be the target compound in which divalent anions from Polymer Compounds A5 and A6 are bonded through calcium ions and both ends of which are capped with dodecanoyl sarcosine anions. The absolute molecular weight of this compound was measured and found to be 19,100, and the theoretical number of structural units was 18.

[Example 2-14] Synthesis of Mixed Polymer Particles Having Ionic Bonds (AP14 Particles)

A 3,000 mL reactor was charged with the ingredients shown below and a stirrer was used at 60°C to effect dissolution.

| | |
|---|---|
| Polymer Compound A4 | 60.0 g |
| Polymer Compound A6 | 20.7 g |
| Disodium terephthalate | 5.6 g |
| Sodium dodecanoyl sarcosinate | 19.6 g |
| Deionized water | 338.9 g |
| Ethanol | 84.7 g |

Next, 163.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP14 particles. The MV of the AP14 particles was 203 μm.

The AP14 particles were analyzed by NMR and IR spectroscopy, as a result of which they were confirmed to be the target compound in which divalent anions from Polymer Compounds A4 and A6 and terephthalic acid dianions are bonded through calcium ions and both ends of which are capped with dodecanoyl sarcosine anions. The absolute molecular weight of this compound was measured and found to be 22,300, and the theoretical number of structural units was 20.

[Example 2-15] Synthesis of Mixed Polymer Particles Having Ionic Bonds (AP15 Particles)

A 3,000 mL reactor was charged with the ingredients shown below and a stirrer was used at 60°C to effect dissolution.

| | |
|---|---|
| Polymer Compound A2 | 40.0 g |
| Polymer Compound A5 | 22.7 g |
| Disodium sebacate | 4.4 g |
| Sodium myristate | 12.2 g |
| Deionized water | 606.2 g |
| Ethanol | 259.8 g |

Next, 79.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP15 particles. The MV of the AP15 particles was 166 $\mu$m.

The AP15 particles were analyzed by NMR and IR spectroscopy, as a result of which they were confirmed to be the target compound in which divalent anions from Polymer Compounds A2 and A5 and sebacic acid dianions are bonded through calcium ions and both ends of which are capped with myristic acid anions. The absolute molecular weight of this compound was measured and found to be 14,500, and the theoretical number of structural units was 11.

[Example 2-16] Synthesis of Mixed Polymer Particles Having Ionic Bonds (AP16 Particles)

A 3,000 mL reactor was charged with the ingredients shown below and a stirrer was used at 60°C to effect dissolution.

| | |
|---|---|
| Polymer Compound A1 | 80.0 g |
| Sodium dodecanoyl sarcosinate | 37.7 g |
| Deionized water | 667.0 g |

Next, 220.0 g of a 10.0 wt% aqueous solution of aluminum sulfate was added dropwise under stirring, thereby carrying out an aluminum substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP16 particles. The MV of the AP17 particles was 63 $\mu$m.

The AP16 particles were analyzed by NMR and IR spectroscopy, as a result of which they were confirmed to be the target compound in which divalent anions from Polymer Compound A1 are bonded through aluminum ions and both ends of which are capped with dodecanoyl sarcosine anions. The particles obtained were a crosslinked material that does not readily dissolve in solvents.

[Example 2-17] Synthesis of Mixed Polymer Particles Having Ionic Bonds (AP17 Particles)

A 3,000 mL reactor was charged with the ingredients shown below and a stirrer was used at 60°C to effect dissolution.

| | |
|---|---|
| Polymer Compound A1 | 80.0 g |
| Polymer Compound A7 | 16.0 g |
| Sodium dodecanoyl sarcosinate | 37.7 g |
| Deionized water | 667.0 g |
| Ethanol | 90.6 g |

Next, 120.0 g of a 10.0 wt% aqueous solution of calcium chloride was added dropwise under stirring, thereby carrying out a calcium substitution reaction and causing particles to settle out. Following the completion of stirring, filtration and washing were repeatedly carried out using deionized water and the particles were dried. The resulting particles were crushed with a crusher (Wonder Blender WB-1, from Osaka Chemical Co., Ltd.), giving the target AP17 particles. The MV of the AP17 particles was 88 $\mu$m.

The AP17 particles were analyzed by NMR and IR spectroscopy, as a result of which they were confirmed to be the target compound in which divalent anions from Polymer Compound A1 and trivalent anions from Polymer Compound A7 are bonded through calcium ions and both ends of which are capped with dodecanoyl sarcosine anions. The particles obtained were a crosslinked material that does not readily dissolve in solvents.

[Comparative Example 2-1] Production of Polymethyl Methacrylate (PMMA) Particles (BP1 Particles)

A 2,000 mL flask was charged all at once with the ingredients shown below and spherical polymer particles BP1 of PMMA alone having a MV of 5 $\mu$m were produced by the same method as in Comparative Example 1-3 in WO 2016/181877 A1. The absolute molecular weight was measured and found to be 53,400.

| | |
|---|---|
| Water | 1,386.5 g |
| Methyl methacrylate | 173.4 g |
| Lauryl peroxide | 8.6 g |
| Polyvinyl pyrrolidone (K-30) | 17.3 g |

[Comparative Example 2-2] Production of Polyethylene (PE) Particles (BP2 Particles)

Commercial polyethylene (Sigma-Aldrich) was crushed with a crusher (Wonder Blender WB-1, from Osaka Chemical Co., Ltd.) and classification was carried out, giving BP2 particles having a MV of 153 $\mu$m. The absolute molecular weight was measured and found to be 150,000.

[Comparative Example 2-3] Production of Polylactic Acid Particles (BP3 Particles)

Commercial polylactic acid (No. LX-175, from Total Corbion PLA) pellets were crushed with a crusher (Wonder Blender WB-1, from Osaka Chemical Co., Ltd.) and classification was carried out, giving BP3 particles having a MV of 241 $\mu$m. The absolute molecular weight was measured and found to be 122,000.

[Comparative Example 2-4] Polypropylene Glycol (PPG) (Compound B4)

Commercial polypropylene glycol was used as Compound B4. The absolute molecular weight was measured and found to be 6,000.

[3] Measurement of Basic Properties

A summary of Polymer Compounds A1 to A7 that form the skeletons of marine biodegradation promoters is presented in Table 1.

[Table 1]

| | Compound (skeleton component) | State | Theoretical molecular weight | Linkage compound | End group structure |
|---|---|---|---|---|---|
| Example 1-1 | Compound A1 (polyester: 1,000) | liquid | 1,244 | succinic anhydride | Na |
| Example 1-2 | Compound A2 (polyester: 2,000) | liquid | 2,244 | succinic anhydride | Na |
| Example 1-3 | Compound A3 (polycaprolactone: 1,000) | solid | 1,244 | succinic anhydride | Na |
| Example 1-4 | Compound A4 (polycaprolactone: 2,000) | solid | 2,244 | succinic anhydride | Na |
| Example 1-5 | Compound A5 (PPG: 1,000) | liquid | 1,272 | maleic anhydride | K |
| Example 1-6 | Compound A6 (polycarbonate: 500) | liquid | 776 | succinic anhydride | K |
| Example 1-7 | Compound A7 (trifunctional polyester: 1,000) | liquid | 1,366 | succinic anhydride | Na |

The melting temperature and contact angle for Particles AP1 to AP17, particles BP1 to BP3 and Compound B4 were measured by the following methods. The results are shown in Table 2.

[Measurement of Melting Temperature]

The melting temperature was measured using a differential scanning calorimeter (DSC 6200, from Seiko Instruments Inc.). Specifically, a 10 mg specimen was precisely weighed, the weighed specimen was placed in an aluminum pan and, using an empty aluminum pan as the reference, temperature ramp-up at a rate of 10°C/min was carried out over a temperature range of 20°C to 200°C. The glass transition temperature (Tg) was calculated from the resulting reversing heat flow curve. That is, the midpoint of the straight line connecting the points of intersection at each tangent of the endothermic curve to the baseline was determined, and this was treated as Tg. The endothermic (melting) peak point on the resulting curve was computed as the melting temperature.

[Measurement of Contact Angle]

The particles obtained in the respective Examples were molded with a hot press set at or above the respective melting temperatures so as to produce a 200 μm thick film. Next, based on JIS R 3257, a droplet of pure water was placed on the surface of the film thus produced and the contact angle of pure water was measured using a contact angle meter (Drop Master 300, from Kyowa Interface Science Co., Ltd.).

[Table 2]

| | Particles (skeleton component) | State | Molecular weight | Endcapped | MV (μm) | Melting temp. (°C) | Contact angle (°) |
|---|---|---|---|---|---|---|---|
| Example 2-1 | AP1 (A1, Ca combination) | solid | 52,400 | no | 165 | 89 | 86 |
| Example 2-2 | AP2 (A2, Ca combination) | solid | 71,400 | no | 274 | 91 | 93 |
| Example 2-3 | AP3 (A3, Ca combination) | solid | 32,500 | no | 89 | 82 | 88 |
| Example 2-4 | AP4 (A4, Mg combination) | solid | 62,300 | no | 124 | 86 | 91 |
| Example 2-5 | AP5 (A5, Ca combination) | solid | 12,300 | yes | 136 | 101 | 96 |
| Example 2-6 | AP6 (A1, Ca combination) | solid | 18,900 | yes | 153 | 94 | 106 |
| Example 2-7 | AP7 (A2, Ca combination) | solid | 21,400 | yes | 82 | 96 | 101 |
| Example 2-8 | AP8 (A3, Ca combination) | solid | 17,800 | yes | 59 | 103 | 100 |
| Example 2-9 | AP9 (A4, Ca combination) | solid | 27,600 | yes | 101 | 77 | 106 |
| Example 2-10 | AP10 (A2/A5, Ca combination) | solid | 13,700 | yes | 149 | 107 | 96 |
| Example 2-11 | AP11 (A1/A4, Mg combination) | solid | 22,800 | yes | 77 | 113 | 106 |
| Example 2-12 | AP12 (A2/A6, Ca combination) | solid | 21,500 | yes | 125 | 105 | 95 |
| Example 2-13 | AP13 (A5/A6, Ca combination) | solid | 19,100 | yes | 93 | 95 | 98 |
| Example 2-14 | AP14 (A4/A6 + terephthalic acid, Ca combination) | solid | 22,300 | yes | 203 | 121 | 105 |
| Example 2-15 | AP15 (A2/A5 + sebacic acid, Ca combination) | solid | 14,500 | yes | 166 | 118 | 97 |
| Example 2-16 | AP16 (A1, A1 combination) | solid | - | yes | 63 | 105 | 104 |

(continued)

| | Particles (skeleton component) | State | Molecular weight | Endcapped | MV (μm) | Melting temp. (°C) | Contact angle (°) |
|---|---|---|---|---|---|---|---|
| Example 2-17 | AP17 (A1/A7, Ca combination) | solid | - | yes | 88 | 124 | 121 |
| Comparative Example 2-1 | BP1 particles (PMMA particles) | solid | 53,400 | - | 5 | 93 | 83 |
| Comparative Example 2-2 | BP2 particles (PE particles) | solid | 150,000 | - | 153 | 116 | 68 |
| Comparative Example 2-3 | BP3 particles (polylactic acid particles) | solid | 120,000 | - | 241 | 152 | 61 |
| Comparative Example 2-4 | Compound B4 (PPG, viscous liquid) | liquid | 6,000 | - | - | - | 35 |

[4] Compound and Powder Biodegradability Tests

[Examples 3-1 to 3-22, Comparative Examples 3-1 to 3-4]

A seawater biodegradation test was performed by the following method on Compounds A1 to A5, Particles AP1 to AP17, Particles BP1 to BP3 and Compound B4. The degree of biodegradation relative to cellulose was evaluated using microcrystalline cellulose (Avicel PH-101, from Sigma-Aldrich Co.) as the control material. The results are shown in Table 3.

<Test Method and Conditions>

Method of Measuring Degree of Biodegradation:

The oxygen consumption was measured with a closed respirometer (see ASTM D6691)

Test Apparatus: OxiTop IDS (WTW)

Incubation Temperature: 30±1°C, in the dark

$$\text{Degree of Biodegradation (\%)} = (\text{BOD}_O - \text{BOD}_B) / \text{ThOD} \times 100$$

BOD$_O$:  Biochemical oxygen demand in test or inoculum activity verification (measured value in mg)
BOD$_B$:  Average biochemical oxygen demand in blank test (measured value in mg)
ThOD:  Theoretical oxygen demand required when test material or control material has completely oxidized (calculated value in mg)

$$\text{Degree of Biodegradation Relative to Cellulose (\%)} =$$
$$(\text{maximum degree of biodegradation of test particles/}$$
$$\text{maximum degree of biodegradation of cellulose}) \times 100$$

Seawater (collected from Tokyo Bay [Port of Chiba in Chiba Prefecture])

Foreign matter was removed from the sampled seawater with a 10 μm filter, after which the seawater was aerated at room temperature (25°C). The following were added as inorganic nutrients: 0.05 g/L of ammonium chloride and 0.1 g/L of potassium dihydrogen phosphate.

EP 4 442 728 A1

[Table 3]

| | Compounds, Particles | Degree of biodegradation (%) | | | | | | | | Degree of biodegradation (maximum value) | Degree of degradation relative to cellulose |
|---|---|---|---|---|---|---|---|---|---|---|---|
| | | 7 days | 14 days | 21 days | 28 days | 35 days | 42 days | 49 days | 56 days | | |
| Example 3-1 | A1 | 23 | 33 | 47 | 52 | 56 | 56 | 55 | 56 | 56 | 86 |
| Example 3-2 | A2 | 20 | 30 | 45 | 50 | 52 | 52 | 53 | 53 | 53 | 82 |
| Example 3-3 | A3 | 30 | 35 | 49 | 56 | 62 | 62 | 61 | 62 | 62 | 95 |
| Example 3-4 | A4 | 32 | 38 | 50 | 59 | 60 | 59 | 60 | 60 | 60 | 92 |
| Example 3-5 | A5 | 22 | 29 | 45 | 51 | 52 | 51 | 51 | 52 | 52 | 80 |
| Example 3-6 | AP1 | 26 | 33 | 53 | 57 | 58 | 57 | 58 | 58 | 58 | 89 |
| Example 3-7 | AP2 | 30 | 35 | 53 | 65 | 66 | 65 | 66 | 66 | 66 | 102 |
| Example 3-8 | AP3 | 36 | 43 | 58 | 68 | 70 | 70 | 69 | 70 | 70 | 108 |
| Example 3-9 | AP4 | 41 | 53 | 62 | 72 | 74 | 73 | 74 | 74 | 74 | 113 |
| Example 3-10 | AP5 | 45 | 55 | 64 | 76 | 77 | 77 | 77 | 77 | 77 | 118 |
| Example 3-11 | AP6 | 38 | 43 | 50 | 64 | 66 | 66 | 67 | 67 | 67 | 103 |
| Example 3-12 | AP7 | 40 | 49 | 52 | 68 | 70 | 71 | 71 | 71 | 71 | 109 |
| Example 3-13 | AP8 | 43 | 50 | 54 | 69 | 72 | 72 | 73 | 73 | 73 | 112 |
| Example 3-14 | AP9 | 49 | 52 | 62 | 75 | 78 | 79 | 79 | 78 | 79 | 121 |
| Example 3-15 | AP10 | 45 | 47 | 58 | 70 | 74 | 74 | 74 | 75 | 75 | 115 |
| Example 3-16 | AP 11 | 31 | 38 | 48 | 58 | 65 | 64 | 65 | 65 | 65 | 100 |
| Example 3-17 | AP12 | 44 | 47 | 57 | 74 | 83 | 83 | 83 | 84 | 84 | 129 |

24

| | Compounds, Particles | Degree of biodegradation (%) | | | | | | | | Degree of biodegradation (maximum value) | Degree of degradation relative to cellulose |
|---|---|---|---|---|---|---|---|---|---|---|---|
| | | 7 days | 14 days | 21 days | 28 days | 35 days | 42 days | 49 days | 56 days | | |
| Example 3-18 | AP13 | 29 | 36 | 46 | 59 | 65 | 65 | 66 | 66 | 66 | 101 |
| Example 3-19 | AP14 | 31 | 35 | 43 | 57 | 63 | 63 | 64 | 64 | 64 | 98 |
| Example 3-20 | AP 15 | 35 | 40 | 46 | 60 | 69 | 70 | 70 | 70 | 70 | 108 |
| Example 3-21 | AP16 | 26 | 32 | 40 | 57 | 60 | 60 | 61 | 61 | 61 | 94 |
| Example 3-22 | AP17 | 22 | 28 | 35 | 45 | 58 | 58 | 60 | 60 | 60 | 92 |
| Comparative Example 3-1 | BP1 | 0 | 0 | 0 | 1 | 1 | 1 | 3 | 3 | 3 | 4 |
| Comparative Example 3-2 | BP2 | 0 | 1 | 1 | 2 | 3 | 4 | 4 | 4 | 4 | 6 |
| Comparative Example 3-3 | BP3 | 0 | 2 | 0 | 2 | 2 | 4 | 5 | 5 | 5 | 7 |
| Comparative Example 3-4 | B4 | 4 | 4 | 3 | 3 | 2 | 4 | 3 | 4 | 3 | 4 |
| Control material | cellulose | 28 | 42 | 56 | 58 | 60 | 65 | 65 | 65 | 65 | - |

From the results shown in Table 3, the particles in the Examples had substantially the same degree of biodegradability as cellulose in incubation periods of up to 56 days.

[5] Solubility Test 1 in Molded Resin Articles

[Examples 4-1 to 4-17, Comparative Examples 4-1 to 4-4]

The particles in the respective Examples (Particles AP1 to AP17, Particles BP1 to BP3) were kneaded at 140°C with the biodegradable resin PBSA (FD-92, from Mitsubishi Chemical Corporation) to a concentration of 20 wt%, and the kneaded material was pressed at 150°C to produce in each case a 150 $\mu$m thick film (Examples 4-1 to 4-17, Comparative Examples 4-1 to 4-3). In addition, PBSA alone (containing no particles) was pressed at 150°C to produce a 150 $\mu$m thick film (Comparative Example 4-4).

The presence or absence of the particle shapes within the film and the contact angle measurement results for the produced films are shown in Table 4. The presence or absence of particle shapes was determined by visual examination, and the contact angles were measured by the method described above in "[3] Measurement of Basic Properties."

The resulting films were cut into 10 mm squares, which were placed in 200 mL of deionized water or 200 mL of a 3 wt% aqueous solution of sodium chloride and left at rest for 15 days or 45 days at 25°C. The film was then taken out and the film surface and appearance were examined with a scanning electron microscope.

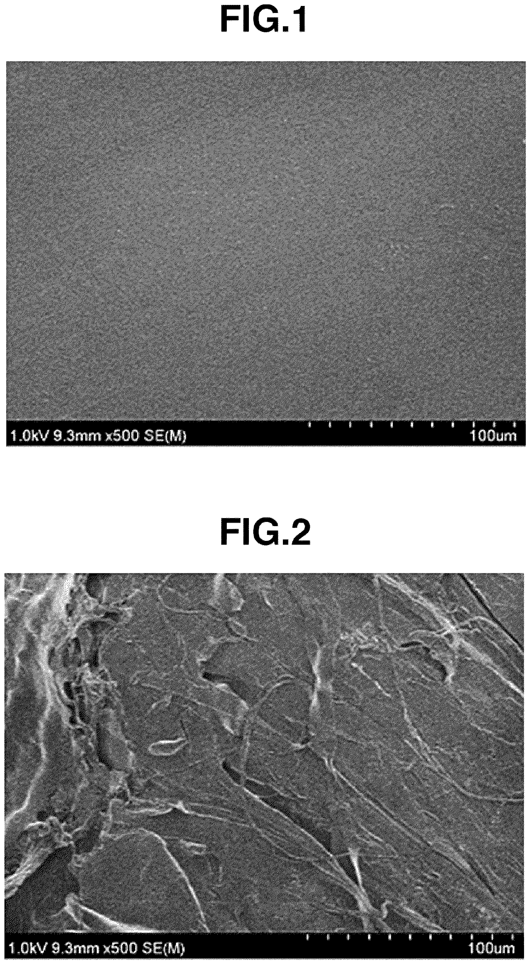

The results are shown in Table 4. FIGS. 1 and 2 respectively show SEM images of the film in Example 4-6 after 45 days of immersion in water and after 45 days of immersion in a 3 wt% aqueous solution of sodium chloride.

[Table 4]

|  | Particles | Water | | Aqueous sodium chloride solution | | Particles present/ absent after molding | Contact angle (°) |
|---|---|---|---|---|---|---|---|
|  |  | 15 days | 45 days | 15 days | 45 days |  |  |
| Example 4-1 | AP1 | unchanged | unchanged | surface changed | surface became uneven | absent | 94 |
| Example 4-2 | AP2 | unchanged | unchanged | surface changed | surface became uneven | absent | 87 |
| Example 4-3 | AP3 | unchanged | unchanged | surface changed | surface became uneven | absent | 85 |
| Example 4-4 | AP4 | unchanged | unchanged | surface changed | surface became uneven | absent | 88 |
| Example 4-5 | AP5 | unchanged | unchanged | surface changed | surface became uneven | absent | 90 |
| Example 4-6 | AP6 | unchanged | unchanged | surface changed | surface became uneven | absent | 96 |
| Example 4-7 | AP7 | unchanged | unchanged | surface changed | surface became uneven | absent | 88 |
| Example 4-8 | AP8 | unchanged | unchanged | surface changed | surface became uneven | absent | 93 |
| Example 4-9 | AP9 | unchanged | unchanged | surface changed | surface became uneven | absent | 96 |

(continued)

|  | Particles | Water | | Aqueous sodium chloride solution | | Particles present/ absent after molding | Contact angle (°) |
|---|---|---|---|---|---|---|---|
|  |  | 15 days | 45 days | 15 days | 45 days | | |
| Example 4-10 | AP10 | unchanged | unchanged | surface changed | surface became uneven | absent | 82 |
| Example 4-11 | AP11 | unchanged | unchanged | surface changed | surface became uneven | absent | 97 |
| Example 4-12 | AP12 | unchanged | unchanged | surface changed | surface became uneven | absent | 87 |
| Example 4-13 | AP13 | unchanged | unchanged | surface changed | surface became uneven | absent | 90 |
| Example 4-14 | AP14 | unchanged | unchanged | surface changed | surface became uneven | absent | 96 |
| Example 4-15 | AP15 | unchanged | unchanged | surface changed | surface became uneven | absent | 88 |
| Example 4-16 | AP16 | unchanged | unchanged | surface changed | surface became uneven | absent | 94 |
| Example 4-17 | AP17 | unchanged | unchanged | surface changed | surface became uneven | absent | 97 |
| Comparative Example 4-1 | BP1 | unchanged | unchanged | unchanged | unchanged | absent | 71 |
| Comparative Example 4-2 | BP2 | unchanged | unchanged | unchanged | unchanged | absent | 63 |
| Comparative Example 4-3 | BP3 | unchanged | unchanged | unchanged | unchanged | absent | 65 |
| Comparative Example 4-4 | PBSA (control) | unchanged | unchanged | unchanged | unchanged | - | 66 |

[6] Solubility Test 2 in Molded Resin Articles

[Examples 5-1 to 5-17, Comparative Examples 5-1 to 5-4]

Aside from changing the biodegradable resin to PBS (FZ-91, from Mitsubishi Chemical Corporation), test films were produced in the same way as in "[5] Solubility Test 1 in Molded Resin Articles" (Examples 5-1 to 5-17, Comparative Examples 5-1 to 5-3). For the sake of comparison, a resin film containing no particles was also produced (Comparative Example 5-4).

The presence or absence of particle shapes within the film and the contact angle measurement results for the produced films are shown in Table 4. The presence or absence of particle shapes was visually checked, and the contact angles were measured by the method described above in "[3] Measurement of Basic Properties."

The resulting films were cut into 10 mm squares, which were placed in 200 mL of deionized water or 200 mL of a 3 wt% aqueous solution of sodium chloride and left at rest for 15 days or 45 days at 25°C. The films was then taken out and the film surface and appearance were examined with a scanning electron microscope. The results are shown in Table 5.

[Table 5]

| | Particles | Water | | Aqueous sodium chloride solution | | Particles present/ absent after molding | Contact angle (°) |
|---|---|---|---|---|---|---|---|
| | | 15 days | 45 days | 15 days | 45 days | | |
| Example 5-1 | AP1 | unchanged | unchanged | surface changed | surface became uneven | absent | 85 |
| Example 5-2 | AP2 | unchanged | unchanged | surface changed | surface became uneven | absent | 87 |
| Example 5-3 | AP3 | unchanged | unchanged | surface changed | surface became uneven | absent | 86 |
| Example 5-4 | AP4 | unchanged | unchanged | surface changed | surface became uneven | absent | 90 |
| Example 5-5 | AP5 | unchanged | unchanged | surface changed | surface became uneven | absent | 91 |
| Example 5-6 | AP6 | unchanged | unchanged | surface changed | surface became uneven | absent | 96 |
| Example 5-7 | AP7 | unchanged | unchanged | surface changed | surface became uneven | absent | 90 |
| Example 5-8 | AP8 | unchanged | unchanged | surface changed | surface became uneven | absent | 93 |
| Example 5-9 | AP9 | unchanged | unchanged | surface changed | surface became uneven | absent | 97 |
| Example 5-10 | AP10 | unchanged | unchanged | surface changed | surface became uneven | absent | 83 |
| Example 5-11 | AP11 | unchanged | unchanged | surface changed | surface became uneven | absent | 98 |
| Example 5-12 | AP12 | unchanged | unchanged | surface changed | surface became uneven | absent | 89 |
| Example 5-13 | AP13 | unchanged | unchanged | surface changed | surface became uneven | absent | 92 |
| Example 5-14 | AP14 | unchanged | unchanged | surface changed | surface became uneven | absent | 95 |

(continued)

| | Particles | Water | | Aqueous sodium chloride solution | | Particles present/ absent after molding | Contact angle (°) |
|---|---|---|---|---|---|---|---|
| | | 15 days | 45 days | 15 days | 45 days | | |
| Example 5-15 | AP15 | unchanged | unchanged | surface changed | surface became uneven | absent | 87 |
| Example 5-16 | AP16 | unchanged | unchanged | surface changed | surface became uneven | absent | 94 |
| Example 5-17 | AP17 | unchanged | unchanged | surface changed | surface became uneven | absent | 98 |
| Comparative Example 5-1 | BP1 | unchanged | unchanged | unchanged | unchanged | absent | 73 |
| Comparative Example 5-2 | BP2 | unchanged | unchanged | unchanged | unchanged | absent | 63 |
| Comparative Example 5-3 | BP3 | unchanged | unchanged | unchanged | unchanged | absent | 66 |
| Comparative Example 5-4 | PBS (control) | unchanged | unchanged | unchanged | unchanged | - | 67 |

[7] Confirmation Test 1 in Seawater (Weight Loss)

[Examples 6-1 to 6-20, Comparative Examples 6-1 to 6-5]

Particles AP1, AP5, AP8, AP13, AP15 and BP1 were added in amounts of 5 wt%, 10 wt%, 20 wt% and 30 wt% to the biodegradable resin PBSA (FD-92, from Mitsubishi Chemical Corporation), and the mixture in each case was kneaded at 140°C and pressed at 150°C to produce a 200 $\mu$m thick film. In addition, as a blank, PBSA alone (containing no particles) was pressed at 150°C to produce a 200 $\mu$m thick film (Comparative Example 6-6).

The resulting film was cut into 20 mm squares, each of which was inserted between layers of stainless steel netting, immersed in seawater (sampled from Tokyo Bay [Port of Chiba in Chiba Prefecture]) that had been placed in a 40 L water tank, and the weight loss over time after 30 days, 60 days and 90 days of immersion was examined. The results are shown in Table 6.

[Table 6]

| | Particles | Amount added (wt%) | Period of immersion and percent weight loss (%) | | |
|---|---|---|---|---|---|
| | | | 30 days | 60 days | 90 days |
| Example 6-1 | AP1 | 5 | 8 | 18 | 27 |
| Example 6-2 | AP1 | 10 | 12 | 22 | 32 |
| Example 6-3 | AP1 | 20 | 16 | 28 | 38 |
| Example 6-4 | AP1 | 30 | 20 | 34 | 41 |
| Example 6-5 | AP5 | 5 | 6 | 15 | 26 |
| Example 6-6 | AP5 | 10 | 10 | 21 | 30 |
| Example 6-7 | AP5 | 20 | 12 | 29 | 34 |
| Example 6-8 | AP5 | 30 | 16 | 34 | 40 |
| Example 6-9 | AP8 | 5 | 10 | 22 | 33 |

(continued)

| | Particles | Amount added (wt%) | Period of immersion and percent weight loss (%) | | |
|---|---|---|---|---|---|
| | | | 30 days | 60 days | 90 days |
| Example 6-10 | AP8 | 10 | 16 | 24 | 37 |
| Example 6-11 | AP8 | 20 | 23 | 32 | 42 |
| Example 6-12 | AP8 | 30 | 26 | 36 | 46 |
| Example 6-13 | AP13 | 5 | 13 | 26 | 33 |
| Example 6-14 | AP13 | 10 | 21 | 32 | 38 |
| Example 6-15 | AP13 | 20 | 26 | 38 | 40 |
| Example 6-16 | AP13 | 30 | 31 | 41 | 51 |
| Example 6-17 | AP15 | 5 | 9 | 16 | 25 |
| Example 6-18 | AP15 | 10 | 14 | 23 | 31 |
| Example 6-19 | AP15 | 20 | 18 | 27 | 37 |
| Example 6-20 | AP15 | 30 | 23 | 34 | 43 |
| Comparative Example 6-1 | BP1 | 5 | 0.1 | 1 | 8 |
| Comparative Example 6-2 | BP1 | 10 | 0.1 | 1 | 10 |
| Comparative Example 6-3 | BP1 | 20 | 0.1 | 1 | 11 |
| Comparative Example 6-4 | BP1 | 30 | 0.1 | 1 | 12 |
| Comparative Example 6-5 | none | - | 0.1 | 1 | 8 |

From the results shown in Table 6, it appears that, concurrent with disintegration by seawater, biodegradability is accelerated owing to the presence of microorganisms in the seawater.

[8] Confirmation Test 2 in Seawater (Biodegradability Test)

[Examples 7-1 to 7-20, Comparative Examples 7-1 to 7-4]

Each of the films obtained in "[7] Confirmation Test 1 in Seawater" was freeze-dried in liquid nitrogen, subsequently crushed with a crusher (Wonder Blender WB-1, from Osaka Chemical Co., Ltd.) and, using a commercially available sieve, crushed particles of each type having an MV of 10 $\mu$m were produced. A seawater biodegradation test was performed on the resulting crushed particles by the following method. In addition, using PBSA alone (containing no particles) as the blank, the degree of biodegradation relative to this blank was evaluated. The results are shown in Table 7.

<Test Method and Conditions>

Method of Measuring Degree of Biodegradation:

The oxygen consumption was measured with a closed respirometer (see ASTM D6691)

Test Apparatus: OxiTop IDS (WTW)

Incubation Temperature: 30±1°C, in the dark

$$\text{Degree of Biodegradation (\%)} = (BOD_O - BOD_B) / ThOD \times 100$$

$BOD_O$: Biochemical oxygen demand in test or inoculum activity verification (measured value in mg)

$BOD_B$: Average biochemical oxygen demand in blank test (measured value in mg)

(continued)

| ThOD: | Theoretical oxygen demand required when test material or control material has completely oxidized (calculated value in mg) |

$$\text{Degree of Biodegradation Relative to Cellulose (\%)} =$$

$$(\text{maximum degree of biodegradation of test particles}/$$

$$\text{maximum degree of biodegradation of cellulose}) \times 100$$

Seawater (collected from Tokyo Bay [Port of Chiba in Chiba Prefecture])

Foreign matter was removed from sampled seawater with a 10 $\mu$m filter, after which the seawater was aerated at room temperature (25°C). The following were added as inorganic nutrients: 0.05 g/L of ammonium chloride and 0.1 g/L of potassium dihydrogen phosphate.

[Table 7]

| | Particles (amount added) | Degree of biodegradation (%) | | | | | | | | Degree of biodegradation (maximum value) | Degree of degradation relative to PBSA |
|---|---|---|---|---|---|---|---|---|---|---|---|
| | | 7 days | 14 days | 21 days | 28 days | 35 days | 42 days | 49 days | 56 days | | |
| Example 7-1 | AP 1 (5 wt%) | 2 | 6 | 9 | 14 | 16 | 17 | 17 | 18 | 18 | 360 |
| Example 7-2 | AP 1 (10 wt%) | 4 | 10 | 19 | 23 | 24 | 25 | 26 | 26 | 26 | 520 |
| Example 7-3 | AP 1 (20 wt%) | 6 | 14 | 23 | 28 | 29 | 30 | 30 | 30 | 30 | 600 |
| Example 7-4 | AP 1 (30 wt%) | 8 | 20 | 28 | 32 | 33 | 33 | 33 | 34 | 34 | 680 |
| Example 7-5 | AP5 (5 wt%) | 4 | 8 | 13 | 17 | 18 | 18 | 19 | 19 | 19 | 380 |
| Example 7-6 | AP5 (10 wt%) | 6 | 13 | 19 | 28 | 30 | 30 | 29 | 29 | 30 | 600 |
| Example 7-7 | AP5 (20 wt%) | 9 | 21 | 26 | 31 | 33 | 33 | 34 | 34 | 34 | 680 |
| Example 7-8 | AP5 (30 wt%) | 10 | 28 | 32 | 36 | 38 | 38 | 38 | 37 | 38 | 760 |
| Example 7-9 | AP8 (5 wt%) | 4 | 10 | 15 | 20 | 22 | 23 | 23 | 23 | 23 | 460 |
| Example 7-10 | AP8 (10 wt%) | 6 | 15 | 21 | 27 | 29 | 29 | 28 | 29 | 29 | 580 |
| Example 7-11 | AP8 (20 wt%) | 7 | 19 | 25 | 29 | 30 | 30 | 31 | 31 | 31 | 620 |
| Example 7-12 | AP8 (30 wt%) | 12 | 28 | 35 | 38 | 40 | 41 | 40 | 41 | 41 | 820 |
| Example 7-13 | AP13 (5 wt%) | 5 | 13 | 18 | 22 | 26 | 26 | 27 | 26 | 27 | 540 |
| Example 7-14 | AP13 (10 wt%) | 10 | 20 | 22 | 31 | 32 | 32 | 32 | 32 | 32 | 640 |

(continued)

| | Particles (amount added) | Degree of biodegradation (%) | | | | | | | | Degree of biodegradation (maximum value) | Degree of degradation relative to PBSA |
|---|---|---|---|---|---|---|---|---|---|---|---|
| | | 7 days | 14 days | 21 days | 28 days | 35 days | 42 days | 49 days | 56 days | | |
| Example 7-15 | AP13 (20 wt%) | 20 | 27 | 30 | 37 | 38 | 38 | 38 | 38 | 38 | 760 |
| Example 7-16 | AP13 (30 wt%) | 27 | 33 | 37 | 41 | 42 | 42 | 42 | 41 | 42 | 840 |
| Example 7-17 | AP15 (5 wt%) | 3 | 6 | 10 | 16 | 18 | 21 | 21 | 21 | 21 | 420 |
| Example 7-18 | AP15 (10 wt%) | 6 | 11 | 15 | 20 | 21 | 23 | 23 | 22 | 23 | 460 |
| Example 7-19 | AP15 (20 wt%) | 8 | 19 | 23 | 31 | 32 | 33 | 32 | 33 | 33 | 660 |
| Example 7-20 | AP15 (30 wt%) | 12 | 23 | 28 | 34 | 36 | 37 | 37 | 37 | 37 | 740 |
| Comparative Example 7-1 | BP1 (5 wt%) | 0 | 0 | 0 | 1 | 1 | 1 | 2 | 2 | 2 | 4.6 |
| Comparative Example 7-2 | BP1 (10 wt%) | 0 | 0 | 0 | 0 | 0 | 0 | 0 | 1 | 1 | 1.5 |
| Comparative Example 7-3 | BP1 (20 wt%) | 0 | 0 | 0 | 0 | 0 | 0 | 0 | 0 | 0 | 0 |
| Comparative Example 7-4 | BP1 (30 wt%) | 0 | 0 | 0 | 0 | 0 | 0 | 0 | 0 | 0 | 0 |
| Blank | PBSA | 0 | 0 | 1 | 1 | 2 | 3 | 4 | 5 | 5 | - |

The results shown in Table 7 demonstrate that the advantageous effects of increasing the overall biodegradability and also of promoting the biodegradability of biodegradable resins in seawater are achieved.

From the above results, the marine biodegradable polymer compound of the invention maintains hydrophobicity in fresh water, yet in seawater it readily dissolves or exhibits hydrophilicity earlier than biodegradable resins by breaking up into smaller molecules due to biodegradation or by incurring salt substitution. Hence, by adding a marine biodegradation promoter consisting of the marine biodegradable polymer compound of the invention to a resin composition having biodegradability in soil or compost or to a mixed composition having weak biodegradability in the ocean, the surface of the composition becomes uneven in seawater, helping microorganisms to adhere and working to accelerate biodegradation, ultimately making it possible to increase the marine biodegradability of the overall composition and reduce the burden on the environment. By combining the marine biodegradation promoter of the invention with a resin having biodegradability in soil or compost, the marine biodegradability can be increased. Moreover, by suitably changing the structure of the organic anions, it is possible to introduce numerous advantageous effects, such as adjusting the melting temperature and melt viscosity, adjusting the degree of crystallization, adjusting adherence by microorganisms and biodegradability, adjusting physical properties such as the tensile strength, flexural strength and elasticity of the resin, improving compatibility with resins, adjusting the degree of hydrophobization, adjusting hydrophobization and adjusting adhesiveness and plasticity, enabling improvements to be made both in terms of the biodegradability and in terms of the physical properties of the mixed resin composition.

**Claims**

1. A marine biodegradable polymer compound comprising a monovalent metal cation and a polymeric polyvalent anion having on a main chain thereof repeating units containing at least one bond selected from the group consisting of ether, ester, amide and carbonate bonds and having a total of two or more monovalent anionic substituents at ends of the main chain and/or side chains.

2. The marine biodegradable polymer compound of claim 1, wherein the monovalent metal cation is a sodium ion or a potassium ion.

3. The marine biodegradable polymer compound of claim 1 or 2, wherein the polymeric polyvalent anion is a polymeric divalent anion having a monovalent anionic substituent at each of both ends of the main chain.

4. The marine biodegradable polymer compound of any one of claims 1 to 3, wherein the polymeric polyvalent anion has a monovalent anionic substituent at each of both ends of a polyalkylene glycol, polyester, polycaprolactone, polycarbonate or polyamide.

5. The marine biodegradable polymer compound of any one of claims 1 to 4, wherein the recurring units include on the main chain at least one bond selected from ether and ester bonds.

6. The marine biodegradable polymer compound of any one of claims 1 to 5, wherein the polymeric polyvalent anion has a molecular weight of from 300 to 5,000.

7. The marine biodegradable polymer compound of any one of claims 1 to 6 which is a linear polymer compound.

8. The marine biodegradable polymer compound of any one of claims 1 to 7 which does not include a cyclic structure on the molecule.

9. The marine biodegradable polymer compound of any one of claims 1 to 8, wherein the anionic substituent is a carboxylic acid anion, a sulfonic acid anion, a sulfate ester anion or a phosphate ester anion.

10. A marine biodegradable polymer compound in which a structural unit having two or more monovalent anionic substituents is bonded with a metal cation having a valence of two or more and which has a monovalent metal cation at an end thereof,
wherein the structural unit includes a polymeric polyvalent anion originating from the marine biodegradable polymer compound of any one of claims 1 to 9.

11. The marine biodegradable polymer compound of claim 10, wherein the structural unit further includes a divalent low-molecular-weight anion having two monovalent anionic substituents with molecular weights of from 100 to 500.

12. The marine biodegradable polymer compound of claim 10 or 11, wherein the monovalent metal cation is a sodium ion or a potassium ion.

13. The marine biodegradable polymer compound of any one of claims 10 to 12, wherein the metal cation having a valence of two or more is a calcium ion, magnesium ion or aluminum ion.

14. The marine biodegradable polymer compound of any one of claims 1 to 13, wherein at least one end is capped with a capping segment in such manner as to not leave a monovalent metal cation.

15. The marine biodegradable polymer compound of claim 14, wherein the capping segment is one having a monovalent hydrocarbon group of 3 or more carbon atoms.

16. The marine biodegradable polymer compound of claim 14 or 15, wherein the capping segment is an anion from a fatty acid having a monovalent hydrocarbon group of 3 or more carbon atoms or an amino acid derivative having a monovalent hydrocarbon group of 3 or more carbon atoms.

17. The marine biodegradable polymer compound of claim 16, wherein the amino acid derivative is a sarcosine derivative or a glutamic acid derivative.

18. The marine biodegradable polymer compound of any one of claims 1 to 17 which is a powder having an average particle size of from 0.1 to 10,000 $\mu$m.

19. The marine biodegradable polymer compound of claim 18 which is a thermoplastic powder having a melting temperature of between 60°C and 200°C.

20. The marine biodegradable polymer compound of claim 18 or 19, wherein a melt-molded body of particles of the powder has a contact angle 30 seconds after a water droplet is deposited thereon of 50° or more.

21. A marine biodegradation promoter comprising the marine biodegradable polymer compound of any one of claims 1 to 20.

22. A marine biodegradable resin composition comprising the marine biodegradation promoter of claim 21 and a resin.

23. The marine biodegradable resin composition of claim 22, wherein the resin is a biodegradable resin.

24. The marine biodegradable resin composition of claim 22 or 23, wherein the content of the marine biodegradation promoter is from 1 to 50 wt% and the content of the biodegradable resin is from 50 to 99 wt%.

25. A molded body obtained from the marine biodegradable resin composition of any one of claims 22 to 24.

# FIG.1

1.0kV 9.3mm x500 SE(M)                                    100um

# FIG.2

1.0kV 9.3mm x500 SE(M)                                    100um

## INTERNATIONAL SEARCH REPORT

| International application No. |
| --- |
| **PCT/JP2021/043935** |

**A.     CLASSIFICATION OF SUBJECT MATTER**

*C08G 63/00*(2006.01)i
FI:   C08G63/00

According to International Patent Classification (IPC) or to both national classification and IPC

**B.      FIELDS SEARCHED**

Minimum documentation searched (classification system followed by classification symbols)

C08G,C08L

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
| --- | --- | --- |
| X | JP 9-272796 A (MITSUI TOATSU CHEMICALS INC.) 21 October 1997 (1997-10-21)<br>claims, paragraphs [0018], [0041], [0055] | 1-13, 18-20, 22-24 |
| X | JP 2003-292609 A (MITSUI CHEMICALS INC.) 15 October 2003 (2003-10-15)<br>claims, paragraph [0116], example 1 | 1, 2, 5-7, 9, 18-20 |
| X | JP 2006-104450 A (SHIN-ETSU CHEMICAL CO., LTD.) 20 April 2006 (2006-04-20)<br>claims, paragraph [0004], examples | 1-3, 5-7, 9,<br>18-20, 22-25 |
| X | JP 2008-174615 A (MITSUBISHI CHEMICAL CORPORATION) 31 July 2008 (2008-07-31)<br>claims, paragraphs [0056], [0078], [0080], example 1 | 1-9, 14-15,<br>18-20, 22-25 |
| X | JP 2013-515833 A (SAMYANG BIOPHARMACEUTICALS CORPORATION) 09 May 2013<br>(2013-05-09)<br>claims, examples | 1-13, 18-20, 22-25 |
| X | JP 4-198114 A (AJINOMOTO CO., INC.) 17 July 1992 (1992-07-17)<br>claims, p. 2, lower right column, line 20, p. 3, upper right column, lines 13-20 | 1-2, 6-9, 18-20, 22-25 |

☑ Further documents are listed in the continuation of Box C.         ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 February 2022** | **22 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2021/043935**

### C. DOCUMENTS CONSIDERED TO BE RELEVANT

| Category* | Citation of document, with indication, where appropriate, of the relevant passages | Relevant to claim No. |
|---|---|---|
| X | JP 10-504335 A (BASF AG) 28 April 1998 (1998-04-28)<br>claims, p. 8, examples | 1-2, 6-9, 18-20, 22-25 |
| X | JP 2003-327693 A (AKASHI, Mitsuru) 19 November 2003 (2003-11-19)<br>claims, paragraphs [0014], [0019], examples | 1-4, 6-9, 18-20 |
| X | WO 2019/026795 A1 (JAPAN ADVANCED INSTITUTE OF SCIENCE & TECH HOKURIKU) 07 February 2019 (2019-02-07)<br>claims, paragraph [0081] | 1-2, 7-13, 18-20, 22-25 |
| X | JP 2007-63514 A (SONY CORPORATION) 15 March 2007 (2007-03-15)<br>claims, paragraphs [0017], [0020], [0029] | 1-2, 5-9, 18-20, 22-25 |
| X | JP 2008-231324 A (MITSUBISHI ENGINEERING PLASTICS CORP.) 02 October 2008 (2008-10-02)<br>claims, paragraphs [0011], [0020], [0033] | 1-4, 6, 7, 9,<br>18-20, 22-25 |
| X | JP 62-70420 A (GENERAL ELECTRIC CO.) 31 March 1987 (1987-03-31)<br>claims, p. 4, lower right column | 1-2, 7, 9, 14-<br>15, 18-20, 22-25 |
| X | JP 10-168177 A (MITSUBISHI CHEMICAL CORPORATION) 23 June 1998 (1998-06-23)<br>claims, paragraphs [0017], [0022], [0065] | 1-2, 5-6, 9,<br>18-20, 22-25 |
| A | JP 2019-510092 A (AKZO NOBEL COATINGS INTERNATIONAL B.V.) 11 April 2019 (2019-04-11)<br>entire text | 1-25 |

Form PCT/ISA/210 (second sheet) (January 2015)

# EP 4 442 728 A1

| INTERNATIONAL SEARCH REPORT | International application No. |
|---|---|
| | **PCT/JP2021/043935** |

**Box No. III**     **Observations where unity of invention is lacking (Continuation of item 3 of first sheet)**

This International Searching Authority found multiple inventions in this international application, as follows:

The inventions in claims 1-25 of the present application include the following four inventions.
Invention 1: The inventions in claims 1-25 relating to a marine biodegradable polymer compound having a repeating unit that contains an ether bond on a main chain.

Invention 2: The inventions in claims 1-25 relating to a marine biodegradable polymer compound having a repeating unit that contains an ester bond on a main chain.

Invention 3: The inventions in claims 1-25 relating to a marine biodegradable polymer compound having a repeating unit that contains an amide bond on a main chain.

Invention 4: The inventions in claims 1-25 relating to a marine biodegradable polymer compound having a repeating unit that contains a carbonate bond on a main chain.

Inventions 1-4 described above share the feature of "a marine biodegradable polymer compound comprising: a polymeric polyvalent anion having a total of two or more monovalent anionic substituents on an end of a main chain and/or side chain; and a monovalent metal cation".

Document 1 discloses a polylactic acid derivative having sodium carboxylate on both ends (claims, examples). As indicated in examples 1-1 and 1-2 of the present application, a polyester having sodium carboxylate on both ends is marine biodegradable.
Therefore, it is understood that the polylactic acid derivative having sodium carboxylate on both ends disclosed in document 1 is also marine biodegradable.

Accordingly, the feature shared by documents 1-4 is not a special technical feature, and thus the inventions lack unity.
Document 1: JP 2013-515833 A

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

## INTERNATIONAL SEARCH REPORT
### Information on patent family members

International application No.

**PCT/JP2021/043935**

| Patent document cited in search report | | | Publication date (day/month/year) | Patent family member(s) | Publication date (day/month/year) |
|---|---|---|---|---|---|
| JP | 9-272796 | A | 21 October 1997 | (Family: none) | |
| JP | 2003-292609 | A | 15 October 2003 | (Family: none) | |
| JP | 2006-104450 | A | 20 April 2006 | US 2007/0232730 A1 claims, paragraph [0002], examples<br>EP 1634924 A1<br>TW 200624509 A | |
| JP | 2008-174615 | A | 31 July 2008 | (Family: none) | |
| JP | 2013-515833 | A | 09 May 2013 | US 2013/0274188 A1 claims, examples<br>EP 2520600 A2<br>KR 10-2011-0076783 A<br>CN 102741317 A | |
| JP | 4-198114 | A | 17 July 1992 | (Family: none) | |
| JP | 10-504335 | A | 28 April 1998 | WO 96/004330 A1<br>EP 773970 A1 | |
| JP | 2003-327693 | A | 19 November 2003 | (Family: none) | |
| WO | 2019/026795 | A1 | 07 February 2019 | US 2020/0207917 A1 claims, paragraph [0116]<br>EP 3663328 A1<br>CN 110945053 A<br>KR 10-2020-0032109 A | |
| JP | 2007-63514 | A | 15 March 2007 | (Family: none) | |
| JP | 2008-231324 | A | 02 October 2008 | (Family: none) | |
| JP | 62-70420 | A | 31 March 1987 | EP 213466 A2 claims, p. 7 | |
| JP | 10-168177 | A | 23 June 1998 | (Family: none) | |
| JP | 2019-510092 | A | 11 April 2019 | US 2019/0023909 A1 whole document<br>WO 2017/125368 A1<br>EP 3405530 A1<br>TW 201728698 A<br>KR 10-2018-0091095 A<br>CN 108473796 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016181877 A1

**Non-patent literature cited in the description**

- **TAKADA, H.** Current status of microplastics contamination --International trends and countermeasures. *Haikibutsu Shigen Junkan Gakkaishi,* 2018, vol. 29 (4), 261-269

- **EBISUI, A. et al.** Decomposition of biodegradable plastics in seawater. *Suisan Kogaku,* 2003, vol. 40 (2), 143-149